# EUROPEAN PATENT SPECIFICATION

(11) **EP 3 688 441 B1**
(45) Date of publication and mention of the grant of the patent: **11.12.2024**
(21) Application number: 18862760.8
(22) Date of filing: 07.09.2018
(51) Int. Cl.: G01N 15/14

(54) **METHODS FOR ALIGNING A LASER WITH A FLOW STREAM AND SYSTEMS THEREOF**
VERFAHREN ZUM AUSRICHTEN EINES LASERS MIT EINEM STRÖMUNGSSTROM UND SYSTEME DAVON
PROCÉDÉS D'ALIGNEMENT D'UN LASER AVEC UN FLUX D'ÉCOULEMENT ET SYSTÈMES CORRESPONDANTS

(30) Priority: 28.09.2017 US 201762564969 P
(43) Date of publication of application: 05.08.2020
(73) Proprietor: Becton, Dickinson and Company, Franklin Lakes, NJ 07417-1880 (US)
(72) Inventor: CAO, Jianying, San Jose, CA 95131 (US); SHAO, Qing, Pleasanton, CA 94588 (US)
(74) Representative: Arnold & Siedsma
(86) International application number: PCT/US2018/050083
(87) International publication number: WO 2019/067185

(56) References cited:
- WO-A1-02/092247
- WO-A1-99/14558
- KR-A- 20090 034 245
- US-A- 5 631 730
- US-A1- 2010 273 208
- US-A1- 2016 169 787
- US-A1- 2016 169 787
- ANONYMOUS: "Round Wedge Prisms", 16 March 2016 (2016-03-16), pages 1 - 3, XP093111144, Retrieved from the Internet <URL:https://web.archive.org/web/20160316021604/http://www.thorlabs.com/NewGroupPage9.cfm?ObjectGroup_ID=147> [retrieved on 20231211]
- ROGER F JOHNSON: "EUCLID(TM): A High Accuracy, Position Compensated Laser Alignment System", PROCEEDINGS OF THE 5TH INTERNATIONAL WORKSHOP ON ACCELERATOR ALIGNMENT (IWAA 1997), 13 October 1997 (1997-10-13), pages 1 - 9, XP055586211, Retrieved from the Internet <URL:https://www.slac.stanford.edu/econf/C971013/papers/037.PDF> [retrieved on 20190507]
- JOHNSON, ROGER F.: "EUCLID(TM): A high accuracy, position compensated laser alignment system", PROCEEDINGS OF THE 5TH INTERNATIONAL WORKSHOP ON ACCELERATOR ALIGNMENT (IWAA 1997), 13 October 1997 (1997-10-13), pages 1 - 9, XP055586211

## Description

### INTRODUCTION

Flow cytometry is a technique used to characterize and/or sort biological material, such as cells of a blood sample or particles of interest in any other type of biological or chemical sample. The characterization of analytes in biological fluids has become an integral part of medical diagnoses and assessments of overall health and wellness of a patient. In particular, analyte detection in physiological fluids, e.g., blood or blood derived products, can be important where the results may play a prominent role in the treatment protocol of a patient in a variety of disease conditions.

A flow cytometer typically includes a sample reservoir for receiving a fluid sample, such as a blood sample, and a sheath reservoir containing a sheath fluid. The flow cytometer transports the particles (including cells) in the fluid sample as a cell stream to a flow cell, while also directing the sheath fluid to the flow cell. Within the flow cell, a liquid sheath is formed around the cell stream to impart a substantially uniform velocity on the cell stream. The flow cell hydrodynamically focuses the cells within the stream to pass through the center of a laser beam in a flow cell. To characterize the components of the flow stream, the flow stream is irradiated with light. Variations in the materials in the flow stream, such as morphologies or the presence of fluorescent labels, may cause variations in the observed light and these variations allow for characterization and separation. To quantify these variations, light must impinge on the flow stream and be collected.

US 5631730A relates to pseudo telecentric flow cytometric optical system for the simultaneous detection of several characteristics of particles suspended in a flowing medium. The system is made up of a flowcell through which the particles pass substantially one particle at a time, an optical system for directing light from a light source onto the flowing particles in the flowcell, a side angle optical collection system for receiving light from the flowing particles and for directing the light to one or more of a first set of detectors, and a forward angle collection system for receiving light from the flowing particles and for directing the light to one or more of a second set of detectors.

WO 02/092247A1 relates to an automated monitoring and alignment system to position the mechanical and optical components of a flow cytometer and to enhance the consistency, performance, and efficiency of particle sorting and analysis applications.

The state of the art also includes:
"Round Wedge Prisms", 16 March 2016 (2016-03-16), pages 1 -3, XP93111144, URL:https://web.archive.org/web/20160316021604/http:// www.thorlabs.com/NewGroupPage9.cfm?ObjectGroup_ID=147

### SUMMARY

The present disclosure relates to a method for aligning a laser with a flow stream, such as in a flow cytometer. The method comprises irradiating a flow stream with a laser through a single wedged window, detecting light signals from the laser irradiated flow stream andaligning the laser with the flow stream by spatially adjusting the single wedged window in response to the detected light signal, wherein spatially adjusting the wedged window comprises adjusting an angle of orientation of the wedged window with respect to the laser thereby changing an angle of laser beam deviation provided by the wedged window.
Systems having a wedged window for aligning a laser with a flow stream are also described. Kits having a wedged window and a mount for spatially adjusting the wedged window to align a laser with a flow stream are also provided.

In embodiments, a sample in a flow stream is irradiated with a laser through a wedged window. The wedged window may have a wedge angle of from 5 arc minute to 120 arc minute, such as from 10 arc minute to 100 arc minute, such as from 25 arc minute to 75 arc minute and including from 30 arc minute to 60 arc minute. The wedged window may be configured to provide for a laser beam deviation of 5 arc minute or less, such as 4 arc minute or less, such as 3 arc minute or less, such as 2 arc minute or less, such as 1 arc minute or less, such as 0.5 arc minute or less and including a laser beam deviation of 0.1 arc minute or less. Depending on the composition of the wedged window, the refractive index may be from 1 to 3. In certain embodiments, the wedged window is a fused silica wedged window with a 10 arc minute wedge angle, a fused silica wedged window with a 20 arc minute wedge angle or a fused silica wedged window with a 30 arc minute wedge angle.

To align the laser with the flow stream, light signals from the laser irradiated flow stream are detected. In some instances, the light signals are detected along a horizontal axis of the flow stream. In other instances, the light signals are detected along a vertical axis of the flow stream. In still other instances, the light signals are detected along both a vertical axis and horizontal axis of the flow stream. In some embodiments, detecting light signals includes detecting light from laser irradiated perturbations in the flow stream, such as perturbations in the flow stream from particles, cells, non-cellular fragments, macromolecules or beads in the flow stream. The detected light may be forward scattered light, side scattered light, transmitted light, emitted light or a combination thereof. Light signals may be detected continuously or in periodic intervals.

The laser is aligned with the flow stream by spatially adjusting the wedged window in response to the detected light signals from the laser irradiated flow stream. In some embodiments, the position of the wedged window is adjusted in an X-Y plane along a horizontal axis of the flow stream. In other embodiments, the angle of orientation of the wedged window is adjusted, such as by rotating the wedged window. The wedged window may be spatially adjusted manually, mechanically or with an electronic or motorized adjuster. In certain embodiments, the wedged window is spatially adjusted to align the laser with the flow stream with a step motor. In some embodiments, methods include determining the angle of orientation of the wedged window (e.g., the rotational position) that produces a maximal light signal amplitude from the laser irradiated flow stream. In other embodiments, methods include determining the position of the wedged window in the X-Y plane that produces a maximal light signal amplitude from the laser irradiated flow stream. In still other embodiments, methods include determining both the angle of orientation and the position of the wedged window in the X-Y plane that produces a maximal light signal amplitude from the laser irradiated flow stream. In certain embodiments, methods further include adjusting the position of the wedged window in the X-Y plane or the adjusting the angle of orientation of the wedged window to produce a maximal light signal amplitude.

Aspects of the present disclosure also include systems having a wedged window for optically aligning a laser with a flow stream. Systems according to certain embodiments include a flow cell configured to propagate a sample in a flow stream, a spatially adjustable wedged window, a laser optically positioned to irradiate the sample in the flow stream through the wedged window and a sensor configured to detect light signals from the laser irradiated flow stream. In embodiments, the laser may be a continuous or pulsed laser. In some instances, the laser is a continuous diode laser, such as an ultraviolet diode laser, a visible diode laser and a near-infrared diode laser. For example, the diode laser may be a 405 nm diode laser or a 488 nm diode laser.

In the subject systems, the wedged window may have a wedge angle of from 5 arc minute to 120 arc minute, such as from 10 arc minute to 100 arc minute, such as from 25 arc minute to 75 arc minute and including from 30 arc minute to 60 arc minute. The wedged window may be configured to provide for a laser beam deviation of 5 arc minute or less, such as 4 arc minute or less, such as 3 arc minute or less, such as 2 arc minute or less, such as 1 arc minute or less, such as 0.5 arc minute or less and including a laser beam deviation of 0.1 arc minute. Depending on the composition of the wedged window, the refractive index may be from 1 to 3. In certain embodiments, the wedged window is a fused silica wedged window with a 10 arc minute wedge angle, a fused silica wedged window with a 20 arc minute wedge angle or a fused silica wedged window with a 30 arc minute wedge angle.

In some embodiments, systems include a processor having memory operably coupled to the processor that includes instructions to spatially adjust the wedged window in response to light signals detected from the laser irradiated flow stream. The memory may include instructions to spatially adjust the position of the wedged window in the X-Y plane along a horizontal axis of the flow stream or an orientational angle (e.g., rotational position) of the wedged window. The memory may also include instructions to determine the position in the X-Y plane along a horizontal axis of the flow stream or an orientational angle of the wedged window that produces a maximal light signal amplitude. In these embodiments, the instructions may further include spatially adjusting one or more of the orientational angle of the wedged window or the position of the wedged window in the X-Y plane along a horizontal axis of the flow stream that produces the maximal light signal amplitude.

Light from the flow stream is detected with a photosensor. The sensor may be configured to detect forward scattered light, side scattered light, transmitted light, emitted light or a combination thereof. Light signals may be detected continuously or in periodic intervals. In some embodiments, the sensor is a position sensing detector, such as a quadrant photodiode or a photodiode array composed of a plurality of detectors. Among the plurality of detectors may be one or more solid-state detectors, such as avalanche photodiodes. In certain instances, the detector array is composed of a plurality of solid state detectors, such as an array of avalanche photodiodes.

Kits including one or more components of the subject systems are also provided. Kits according to certain embodiments include a flow cell configured to propagate a sample in a flow stream, a wedged window and a mount configured for coupling to the wedged window and for spatially adjusting the wedged window to align a laser with the flow stream (e.g., in a flow cytometer). Kits may also include a support stage for coupling to the wedged window and for spatially adjusting the wedged window. In certain embodiments, the support stage includes a motor, such as a step motor. The subject kits may also include optical adjustment components such as, for example, a focusing lens, a collimator, beam splitter, a wavelength separator or a combination thereof. Kits may also include optical relay systems for propagating light from the sample in the flow stream to the detector, such as a free-space light relay system or fiber optics (e.g., a fiber optics light relay bundle). Kits may also include a pump for controlling the rate of the flow stream for detecting light from the laser irradiated flow stream, such as a peristaltic pump or a peristaltic pump with a pulse damper.

### BRIEF DESCRIPTION OF THE FIGURES

The invention may be best understood from the following detailed description when read in conjunction with the accompanying drawings. Included in the drawings are the following figures:
**FIG.** 1 depicts the deviation of a laser beam by irradiation through a wedged window according to certain embodiments.
**FIG.** 2 depicts a side view of a wedged window according to certain embodiments.
**FIG.** 3 depicts the deviation of a laser beam path in response to the change in the angle of orientation of the wedged window according to certain embodiments.

### DETAILED DESCRIPTION

Aspects of the present disclosure include methods and systems for aligning a laser with a flow stream, such as in a flow cytometer. Methods according to certain embodiments include irradiating a flow stream with a laser through a wedged window, detecting light signals from the laser irradiated flow stream and aligning the laser with the flow stream by spatially adjusting the wedged window in response to the detected signal. Systems having a wedged window for aligning a laser with a flow stream are also described. Kits having a wedged window and a mount for spatially adjusting the wedged window to align a laser with a flow stream are also provided.

Before the present invention is described in greater detail, it is to be understood that this invention is not limited to particular embodiments described, as such may vary. It is also to be understood that the terminology used herein is for the purpose of describing particular embodiments only, and is not intended to be limiting, since the scope of the present invention will be limited only by the appended claims.

Where a range of values is provided, it is understood that each intervening value, to the tenth of the unit of the lower limit unless the context clearly dictates otherwise, between the upper and lower limit of that range and any other stated or intervening value in that stated range, is encompassed within the invention. The upper and lower limits of these smaller ranges may independently be included in the smaller ranges and are also encompassed within the invention, subject to any specifically excluded limit in the stated range. Where the stated range includes one or both of the limits, ranges excluding either or both of those included limits are also included in the invention.

Unless defined otherwise, all technical and scientific terms used herein have the same meaning as commonly understood by one of ordinary skill in the art to which this invention belongs. Although any methods and materials similar or equivalent to those described herein can also be used in the practice or testing of the present invention, representative illustrative methods and materials are now described.

It is noted that, as used herein and in the appended claims, the singular forms "a", "an", and "the" include plural referents unless the context clearly dictates otherwise. It is further noted that the claims may be drafted to exclude any optional element. As such, this statement is intended to serve as antecedent basis for use of such exclusive terminology as "solely," "only" and the like in connection with the recitation of claim elements, or use of a "negative" limitation.

As will be apparent to those of skill in the art upon reading this disclosure, each of the individual embodiments described and illustrated herein has discrete components and features which may be readily separated from or combined with the features of any of the other several embodiments without departing from the scope or spirit of the present invention. Any recited method can be carried out in the order of events recited or in any other order which is logically possible.

As summarized above, the present disclosure provides methods for aligning a laser with a flow stream. In further describing embodiments of the disclosure, methods for aligning the laser by irradiating a flow stream through a wedged window are first described in greater detail. Next, systems having a spatially adjustable wedged window and a laser optically positioned to irradiate the sample in the flow stream through the wedged window suitable for practicing the subject methods are described. Kits having a flow cell, a spatially adjustable wedged window and a mount for coupling to the wedged window are also provided.

### METHODS FOR ALIGNING A LASER WITH A FLOW STREAM

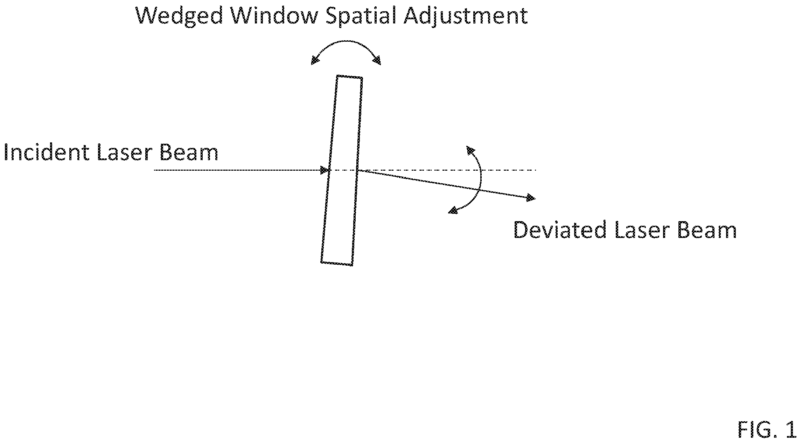

Aspects of the disclosure include methods for aligning a laser with a flow stream (e.g., in a flow cytometer). In practicing methods according to embodiments, a flow stream is irradiated with a laser through a wedged window, light from the flow stream is detected and spatially adjusting the wedged window in response to the detected light signals from the laser irradiated flow stream. The term "wedged window" is used herein in its conventional sense to refer to a transparent optical substrate having a wedge angle that produces non-collinear back reflections such that a change in the incident angle of laser light results in only a small (e.g., a negligible) change in the angle of laser beam deviation. As such, wedged windows according to embodiments of the invention provide for fine-tune positioning of a laser beamspot on a flow stream. In certain embodiments, a large change in the incident angle of laser light on the wedged window results in only a small deviation in the resulting laser beam angle. As described in greater detail below, wedged windows according to embodiments of the disclosure have a wedge angle where a change in the incident angle of laser light results in a deviation in the laser beam angle by 10% or less, such as by 9% or less, such as by 8% or less, such as by 7% or less, such as by 6% or less, such as by 5% or less, such as by 4% or less, such as by 3% or less, such as by 2% or less, such as by 1% or less, such as by 0.5% or less, such as by 0.1% or less, such as by 0.05% or less and including by 0.01% or less. For example, where the incident angle of laser light is changed by 25 arc minutes or more, the angle of deviation changes by 10 arc minutes or less, such as by 9 arc minutes or less, such as by 8 arc minutes or less, such as by 7 arc minutes or less, such as by 6 arc minutes or less, such as by 5 arc minutes or less, such as by 4 arc minutes or less, such as by 3 arc minute or less, such as by 2 arc minutes or less, such as by 1 arc minute or less, such as by 0.5 arc minutes or less, such as by 0.1 arc minutes or less, such as by 0.05 arc minutes or less and including by 0.01° or less. Figure 1 depicts the deviation of a laser beam by irradiation through a wedged window according to certain embodiments. As shown in Figure 1, a laser beam is incident on a first surface of the wedged window and is refracted by an angle (as described above) providing for a laser beam that has a beam path that is deviated from the beam path of the incident laser beam.

In certain instances, wedged windows have a wedge angle such that when the position of incident laser irradiation is moved (e.g., along the X-Y plane) the position of the beamspot on the flow stream (e.g., along the horizontal axis of the flow stream) is changed by 10% or less of the change in distance of the position of incident laser irradiation, such as by 9% or less, such as by 8% or less, such as by 7% or less, such as by 6% or less, such as by 5% or less, such as by 4% or less, such as by 3% or less, such as by 2% or less, such as by 1% or less, such as by 0.5% or less, such as by 0.1% or less, such as by 0.05% or less and including by 0.01% or less of the change in distance of the position of incident laser irradiation. For example, where the position of incident laser irradiation is moved by 1 mm, the position of the beamspot on the flow stream when irradiated through the subject wedged window is changed by 0.1 mm or less, such as by 0.09 mm or less, such as by 0.08 mm or less, such as by 0.07 mm or less, such as by 0.06 mm or less, such as by 0.05 mm or less, such as by 0.04 mm or less, such as by 0.03 mm or less, such as by 0.02 mm or less, such as by 0.01 mm or less, such as by 0.005 mm or less and including by 0.001 mm or less.

In other instances, wedged windows have a wedge angle such that when the wedged window is rotated (e.g., in an X-Y plane, in an X-Z plane or an Y-Z plane), the position of the beamspot on the flow stream (e.g., along the horizontal axis of the flow stream) is changed by 10% or less of the change in distance of the position of incident laser irradiation, such as by 9% or less, such as by 8% or less, such as by 7% or less, such as by 6% or less, such as by 5% or less, such as by 4% or less, such as by 3% or less, such as by 2% or less, such as by 1% or less, such as by 0.5% or less, such as by 0.1% or less, such as by 0.05% or less and including by 0.01% or less of the change in distance of the position of incident laser irradiation. For example, where the wedged window is rotated (e.g., in an X-Y plane, in an X-Z plane or an Y-Z plane) by an angle of from 10 arc minute to 120 arc minutes, the position of the beamspot on the flow stream is changed by 0.1 mm or less, such as by 0.09 mm or less, such as by 0.08 mm or less, such as by 0.07 mm or less, such as by 0.06 mm or less, such as by 0.05 mm or less, such as by 0.04 mm or less, such as by 0.03 mm or less, such as by 0.02 mm or less, such as by 0.01 mm or less, such as by 0.005 mm or less and including by 0.001 mm or less.

In embodiments, a flow stream is irradiated with a laser through a wedged window. In some embodiments, the wedged window is directly irradiated with the laser (i.e., no other optical components are positioned between the laser and wedged window). In other embodiments, the wedged window is irradiated with the laser through one or more optical adjustment components. By "optical adjustment" is meant that a parameter of irradiation by the laser may be changed as desired, such as to increase or decrease the width of the laser, laser irradiation direction, laser wavelength, laser beam profile, laser beam width, laser beam intensity, focal point of the laser, laser pulse width or some other parameter. In some instances, optical adjustment is a magnification protocol configured to increase the spatial dimensions of the laser beamspot, such as by 1% or greater, such as by 5% or greater, such as by 10% or greater, such as by 25% or greater, such as by 50% or greater and including increasing the spatial dimensions of the laser beamspot by 75% or greater. In other instances, optical adjustment is a de-magnification protocol configured to decrease the spatial dimensions of the laser beamspot, such as by 1% or greater, such as by 5% or greater, such as by 10% or greater, such as by 25% or greater, such as by 50% or greater and including decreasing the spatial dimensions of the laser beamspot by 75% or greater.

In other instances, the optical adjustment includes collimating the laser light before irradiation through the wedged window. The term "collimate" is used in its conventional sense to refer to the optically adjusting the collinearity of light propagation or reducing divergence by the light of from a common axis of propagation. In some instances, collimating includes narrowing the spatial cross section of a light beam.

In other instances, optical adjustment includes changing the direction of the laser light before irradiation through the wedged window, such as changing the propagation of the laser light beam by 1° or more, such as by 5° or more, such as by 10° or more, such as by 15° or more, such as by 20° or more, such as by 25° or more, such as by 30° or more, such as by 45° or more, such as by 60° or more, such as by 75° or more and including changing the direction of laser light propagation by 90° or more.

In certain embodiments, the optical adjustment component is a wavelength separator. The term "wavelength separator" is used herein in its conventional sense to refer to an optical protocol for separating polychromatic light into its component wavelengths. Wavelength separation, according to certain embodiments, may include selectively passing or blocking specific wavelengths or wavelength ranges of the polychromatic light. Wavelength separation protocols of interest include, but are not limited to, colored glass, bandpass filters, interference filters, dichroic mirrors, diffraction gratings, monochromators and combinations thereof, among other wavelength separating protocols. In some embodiments, the wavelength separator is an optical filter. For example, the optical filter may be a bandpass filter having minimum bandwidths ranging from 2 nm to 100 nm, such as from 3 nm to 95 nm, such as from 5 nm to 95 nm, such as from 10 nm to 90 nm, such as from 12 nm to 85 nm, such as from 15 nm to 80 nm and including bandpass filters having minimum bandwidths ranging from 20 nm to 50 nm.

Wedged windows, according to embodiments, may vary depending on the spatial position of the laser and the desired position of the beamspot on the flow stream. Wedged windows of interest may be any suitable shape, including but not limited to rectilinear cross sectional shapes, e.g., squares, rectangles, trapezoids, triangles, hexagons, etc., curvilinear cross-sectional shapes, e.g., circles, ovals, etc., as well as irregular shapes, e.g., a parabolic bottom portion coupled to a planar top portion, etc.

Light from the laser impinges onto the wedged window at an incident angle. Depending on the wedge angle of the wedged window and the desired position of the laser beamspot on the flow stream (as described in detail below), the incident angle of laser irradiation onto the wedge window may vary, ranging from 1° to 60°, such as from 5° to 55°, such as from 10° to 50° and including from 15° to 45°.

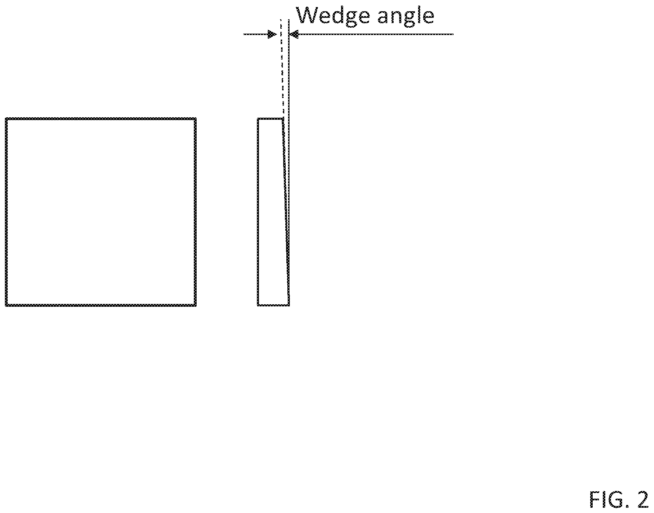

The wedge angle of the subject wedged windows may vary, ranging from 5 arc minute to 120 arc minute, such as from 10 arc minute to 115 arc minute, such as from 15 arc minute to 110 arc minute, such as from 20 arc minute to 105 arc minute, such as from 25 arc minute to 100 arc minute, such as from 30 arc minute to 95 arc minute, such as from 35 arc minute to 90 arc minute, such as from 40 arc minute to 85 arc minute and including from 30 arc minute to 60 arc minute. In some embodiments, the wedge angle is 30 arc minute. In other embodiments, the wedge angle is 20 arc minute. In yet other embodiments, the wedge angle is 10 arc minute. In some embodiments, the wedge angle of the wedged window is 120 arc minute or less, such as 115 arc minute or less, such as 110 arc minute or less, such as 105 arc minute or less, such as 100 arc minute or less, such as 95 arc minute or less, such as 90 arc minute or less, such as 85 arc minute or less, such as 80 arc minute or less, such as 75 arc minute or less, such as 70 arc minute or less, such as 65 arc minute or less, and including wedge windows having a wedge angle of 60 arc minute or less. Figure 2 depicts a side view of a wedged window according to certain embodiments. The wedged window has at least two transparent surfaces where at least a first surface forms a wedge angle which when irradiated by a laser beam provides for a small deviation in the output laser beam.

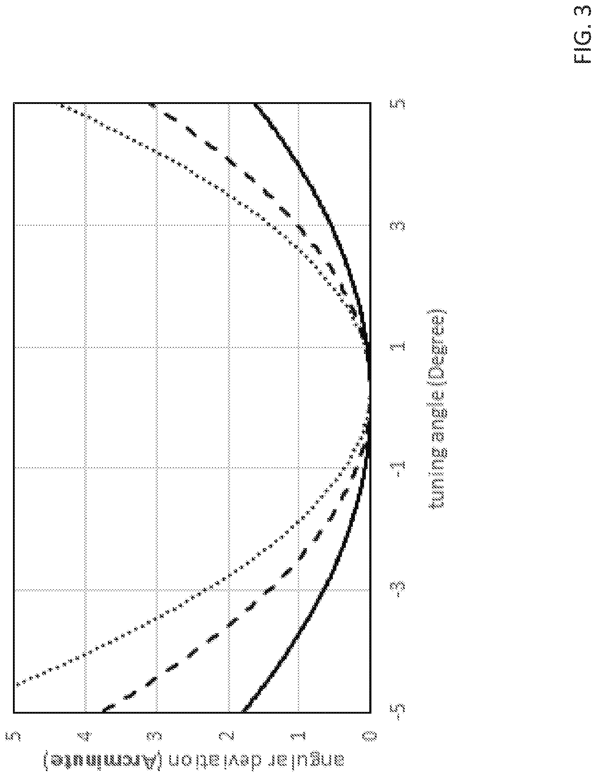

The subject wedged windows provide for, in embodiments, a laser beam deviation, ranging from 0.001 arc minute to 10 arc minute, such as from 0.005 arc minute to 9 arc minute, such as from 0.01 arc minute to 8 arc minute, such as from 0.05 arc minute to 7 arc minute, such as from 0.1 arc minute to 6 arc minute, such as from 0.5 arc minute to 5 arc minute and including from 1 arc minute to 3 arc minute. In some embodiments, the wedged windows provide for a laser beam deviation that is 5 arc minute or less, such as 4 arc minute or less, such as 3 arc minute or less, such as 2 arc minute or less, such as 1 arc minute or less, such as 0.5 arc minute or less, such as 0.1 arc minute or less, such as 0.05 arc minute or less, such as 0.01 arc minute or less, such as 0.005 arc minute or less, such as 0.001 arc minute or less and including providing for a laser beam deviation angle of 0.0001 arc minute or less. Figure 3 depicts the deviation of a laser beam path in response to the change in the angle of orientation of the wedged window according to certain embodiments.

In some embodiments, the wedged windows have a refractive index that ranges from 1 to 3, such as from 1.1 to 2.9, such as from 1.2 to 2.8, such as from 1.3 to 2.7, such as from 1.4 to 2.6, such as from 1.5 to 2.7, such as from 1.6 to 2.6, such as from 1.7 to 2.5, such as from 1.8 to 2.4 and including from 1.9 to 2.3. Depending on the transparency desired, wedged windows of interest may be formed from any suitable material including but not limited to glass (e.g., N-SF10, N-SF11, N-SF57, N-BK7, N-LAK21 or N-LAF35 glass), silica (e.g., fused silica), quartz, crystal (e.g., CaF₂ crystal), zinc selenide (ZnSe), F₂, germanium (Ge) titanate (e.g., S-TIH11), borosilicate (e.g., BK7). In some embodiments, the wedged window has a transparency window of from 150 nm to 5 µm; from 180 nm to 8 µm, from 185 nm to 2.1 µm, from 200 nm to 6 µm, from 200 nm to 11 µm, from 250 nm to 1.6 µm, from 350 nm to 2 µm, from 600 nm to 16 µm, from 1.2 µm to 8 µm, from 2 µm to 16 µm or some other wavelength range.

The wedged window may be irradiated by the laser at any suitable distance, such as at a distance of 0.001 mm or more from the flow stream, such as 0.005 mm or more, such as 0.01 mm or more, such as 0.05 mm or more, such as 0.1 mm or more, such as 0.5 mm or more, such as 1 mm or more, such as 5 mm or more, such as 10 mm or more, such as 25 mm or more and including at a distance of 100 mm or more from the flow stream. Likewise, the wedged window may be irradiated by the laser at any suitable angle, as described above, such as where the incident angle of irradiation by the laser ranges from 10° to 90°, such as from 15° to 85°, such as from 20° to 80°, such as from 25° to 75° and including from 30° to 60°.

In aligning the laser with the flow stream according to embodiments, the wedged window may be irradiated by the laser continuously or in discrete intervals. In some instances, methods include irradiating the flow stream with the laser through the wedged window continuously, such that alignment of the laser with the flow stream is monitored by collecting real-time data. In other instances, methods include irradiating the flow stream with the laser through the wedged window in discrete intervals, such as every 0.001 milliseconds, every 0.01 milliseconds, every 0.1 milliseconds, every 1 millisecond, every 10 milliseconds, every 100 milliseconds and including every 1000 milliseconds, or some other interval. Where the flow stream is irradiated at discrete intervals, the frequency of irradiation may depend such as on the concentration of components in the flow stream (e.g., cells, bead, non-cellular particles) as well as the flow rate of the flow stream.

In practicing embodiments of the subject methods, one or more light signals are detected from the flow stream irradiated through the wedged window. The light signals may be detected at any suitable distance from the flow stream so long as a usable light signal is detected. For example, the light signals may detected at 0.01 mm or more from the flow stream, such as 0.05 mm or more, such as 0.1 mm or more, such as 0.5 mm or more, such as 1 mm or more, such as 2.5 mm or more, such as 5 mm or more, such as 10 mm or more, such as 15 mm or more, such as 25 mm or more and including 50 mm or more from the flow stream. The light signals may also be detected at any angle from the flow stream. For example, light signals may be detected at an angle with respect to the vertical axis of the flow stream which ranges from 10° to 90°, such as from 15° to 85°, such as from 20° to 80°, such as from 25° to 75° and including from 30° to 60°. In some instances, detectors (as described in greater detail below) are positioned at 30° to 60° with respect to the vertical axis of the flow stream.

To align the laser with the flow stream, the flow stream may be irradiated with the laser on one or more positions along the flow stream and light signals may be detected at each position irradiated along the flow stream. For example, two or more light signals, such as three or more light signals, such as four or more light signals, such as five or more light signals and including 10 or more light signals may be detected at each position irradiated along the flow stream by the laser. Where irradiation is continuous, one or more light signals may be detected at different times while irradiating the flow stream, such as two or more light signals, such as three or more light signals, such as four or more light signals, such as five or more light signals and including 10 or more light signals may be detected at different times while irradiating the flow stream.

In some embodiments, detecting the light signals from the laser irradiated flow stream includes moving the laser and one or more detectors alongside the path of the flow stream. For instances, the laser and detectors may be moved upstream or downstream alongside the flow stream detecting two or more light signals at a plurality of the positions along the vertical axis of the flow stream. In embodiments, a light signals may be detected at one or more vertical positions along the flow stream, such as at 2 or more positions, such as at 3 or more positions, such as at 5 or more positions and including at 10 or more vertical positions along the flow stream. Where the light signals are collected at more than one vertical position along the flow stream, the distance between each position along the flow stream may vary, such as being separated by 0.001 mm or more, such as by 0.005 mm or more, such as by 0.01 mm or more, such as by 0.05 mm or more, such as by 0.1 mm or more, such as by 0.5 mm or more, such as by 1 mm or more, such as by 5 mm or more, such as by 10 mm or more, such as by 25 mm or more and including detecting light signals at two or more vertical positions that are separated by 100 mm or more.

To align the laser with the flow stream, the method according to the invention includes spatially adjusting the wedged window in response to the detected light signals, wherein adjusting the wedged window includes changing the angle of orientation (e.g., rotational angle) of the wedged window.

According to the invention, the wedged window is spatially adjusted by changing the angle of orientation of the wedged window. For example, the wedged window may be rotated (e.g., in the X-Y plane, X-Z plane or Y-Z plane) by 0.0001° or more, such as by 0.0005° or more, such as by 0.001° or more, such as by 0.005° or more, such as by 0.01° or more, such as by 0.05° or more, such as by 0.1° or more, such as by 0.2° or more, such as by 0.3° or more, such as by 0.4° or more, such as by 0.5° or more, such as by 1° or more, such as by 2° or more, such as by 3° or more, such as by 4° or more, such as by 5° or more, such as by 10° or more, such as by 15° or more, such as by 20° or more, such as by 25° or more, such as by 30° or more and including by rotating the wedged window by 45° or more. In certain embodiments, the wedged window is rotated (e.g., in the X-Y plane, X-Z plane or Y-Z plane) by 0.001 arc minute or more, such as by 0.005 arc minute or more, such as by 0.01 arc minute or more, such as by 0.05 arc minute or more, such as by 0.1 arc minute or more, such as by 0.5 arc minute or more, such as by 1 arc minute or more, such as by 2 arc minute or more, such as by 3 arc minute or more, such as by 4 arc minute or more, such as by 5 arc minute or more, such as by 6 arc minute or more, such as by 7 arc minute or more, such as by 8 arc minute or more, such as by 9 arc minute or more and including by 10 arc minute or more. In certain instances, methods include spatially adjusting the position of the wedged window to fine tune the laser beam position on the flow stream, where methods in these embodiments include rotating (e.g., in the X-Y plane, X-Z plane or Y-Z plane) the wedged window by 5 arc minute or less, such as by 4.5 arc minute or less, such as by 4 arc minute or less, such as by 3.5 arc minute or less, such as by 3 arc minute or less, such as by 2.5 arc minute or less, such as by 2 arc minute or less, such as by 1.5 arc minute or less, such as by 1 arc minute or less, such as by 0.5 arc minute or less, such as by 0.1 arc minute or less, such as by 0.05 arc minute or less, such as by 0.01 arc minute or less, such as by 0.005 arc minute or less and including by 0.001 arc minute or less.

In some embodiments, the methods include assessing the alignment of the laser with the flow stream. In some instances, assessing the alignment of the laser with the flow stream includes determining a spatial position of the laser beamspot that gives a light signal amplitude above a predetermined threshold. For example, the laser and the flow stream may be determined to be aligned when the light signal amplitude is at or above the predetermined threshold and is determined to not be aligned with the light signal amplitude is below the predetermined threshold. In other instances, the alignment of the laser with the flow stream is assessed by comparing the amplitude of light signals when the flow stream is irradiated at different positions along a horizontal axis of the flow stream. In yet other instances, the alignment of the laser with the flow stream is assessed by comparing the amplitude of light signals with a maximal light signal amplitude. The maximal light signal amplitude may be a predetermined maximal light signal amplitude or may be determined specifically for a particular flow stream and laser. In some instances, the maximal light signal amplitude is predetermined based the parameters of the flow stream and laser, such as the diameter of the flow stream (e.g., as estimated by flow cell nozzle orifice in a flow cytometer), the spatial width of irradiation of the laser and type of photodetector (e.g., quadrant photodiode) employed.

In other instances, methods include determining the spatial position of the laser beamspot that the gives a maximal light signal amplitude by irradiating the flow stream at a plurality of positions and detecting a plurality of light signals corresponding to the different irradiated positions on the flow stream. In some embodiments, the plurality of light signals are detected by spatially adjusting the wedged window (e.g., a horizontal position, a vertical position, an angle of orientation or a combination thereof) in discrete increments and measuring light signals at each increment. In one example, the wedged window is displaced along the horizontal axis of the flow stream in discrete increments, such as in increments of 0.001 mm or more, such as 0.005 mm or more, such as 0.01 mm or more, such as 0.05 mm or more, such as 0.1 mm or more, such as 0.5 mm or more, such as 1 mm or more, such as 2 mm or more and including displacing the wedged window along the horizontal axis of the flow stream in increments of 5 mm or more. In another example, the wedged window is displaced along the vertical axis of flow stream in discrete increments, such as in increments of 0.001 mm or more, such as 0.005 mm or more, such as 0.01 mm or more, such as 0.05 mm or more, such as 0.1 mm or more, such as 0.5 mm or more, such as 1 mm or more, such as 2 mm or more and including displacing the wedged window along the vertical axis of the flow stream in increments of 5 mm or more. In yet another example, the angle of orientation of the wedged window is adjusted in discrete increments, such as in increments of 0.1° or more, such as 0.2° or more, such as 0.3° or more, such as 0.4° or more, such as 0.5° or more, such as 1° or more, such as 2° or more, such as 3° or more, such as 4° or more and including 5° or more. In still another example, the wedged window is rotated in discrete increments, such as in increments of 0.0001 arc minute or more, such as 0.0005 arc minute or more, such as 0.001 arc minute or more, such as 0.005 arc minute or more, such as 0.01 arc minute or more, such as 0.05 arc minute or more, such as 0.1 arc minute or more, such as 0.5 arc minute or more, such as 1 arc minute or more, such as 2 arc minute or more, such as 3 arc minute or more, such as 4 arc minute or more and including 5 arc minute or more. In certain embodiments, a plurality of light signals are detected while adjusting a horizontal position of the wedged window in discrete increments of 0.001 mm or more, such as 0.005 mm or more, such as 0.01 mm or more, such as 0.05 mm or more, such as 0.1 mm or more, such as 0.5 mm or more, such as 1 mm or more, such as 2 mm or more, such as 5 mm or more and adjusting the angle of orientation in increments of 0.1° or more, such as 0.2° or more, such as 0.3° or more, such as 0.4° or more, such as 0.5° or more, such as 1° or more, such as 2° or more, such as 3° or more, such as 4° or more, such as 5° or more; and measuring light signals at each increment. In other embodiments, a plurality of light signals are detected while adjusting a horizontal position of the wedged window in discrete increments of 0.001 mm or more, such as 0.005 mm or more, such as 0.01 mm or more, such as 0.05 mm or more, such as 0.1 mm or more, such as 0.5 mm or more, such as 1 mm or more, such as 2 mm or more, such as 5 mm or more and rotating (e.g., in the X-Y plane, X-Z plane or Y-Z plane) the wedged window in increments of0.0001 arc minute or more, such as 0.0005 arc minute or more, such as 0.001 arc minute or more, such as 0.005 arc minute or more, such as 0.01 arc minute or more, such as 0.05 arc minute or more, such as 0.1 arc minute or more, such as 0.5 arc minute or more, such as 1 arc minute or more, such as 2 arc minute or more, such as 3 arc minute or more, such as 4 arc minute or more and including 5 arc minute or more.

In other embodiments, determining a maximal light signal amplitude includes spatially adjusting the wedged window in a continuous manner and collecting light signals at predetermined time intervals. In these embodiments, light signals are collected at predetermined time intervals, such as every 0.001 milliseconds or more, such as every 0.005 milliseconds or more, such as every 0.01 milliseconds or more, such as every 0.05 milliseconds or more, such as every 0.1 milliseconds or more, such as every 0.5 milliseconds or more, such as every 1 millisecond or more, such as every 5 milliseconds or more, such as every 10 milliseconds or more, such as every 25 milliseconds or more and including every 100 milliseconds or more.

In assessing alignment of the laser with the flow stream, the laser is in certain embodiments, determined to be not aligned with the flow stream when the observed light signal amplitude is less than a predetermined or determined (as described above) maximal light signal amplitude. In other embodiments, the laser is determined to be not aligned with the flow stream when the calculated difference between the observed light signal amplitude and the maximal light signal amplitude exceeds a predetermined threshold. For example, the laser is determined to be not aligned with the flow stream when the observed light signal amplitude is less than the maximal light signal amplitude by 1% or more, by 2% or more, by 5% or more, by 10% or more, by 15% or more, by 20% or more, by 25% or more and including by 50% or more.

In some embodiments, methods include determining a position of irradiation by the laser on the flow stream that produces the maximal light signal amplitude by capturing images of the irradiated flow stream and mapping the spatial position of the irradiation on the flow stream along the horizontal axis. For example, one or more images of the laser irradiated flow stream may be captured, such as 2 or more images, such as 3 or more images, such as 5 or more images and including 10 or more images of the irradiated flow stream may be captured. Based on the determined spatial position of irradiation by the laser on the flow stream, methods may include generating a data signal corresponding to the spatial position of irradiation by the laser on the flow stream that produces the maximal light signal amplitude. In some embodiments, the position of irradiation by the laser on the flow stream that produces the maximal light signal amplitude is where the spatial width of the laser is centered with the center of the flow stream. In other embodiments, the position of irradiation by the laser on the flow stream that produces the maximal light signal amplitude is where the spatial width of the laser is displaced from the center of the flow stream by 0.001 µm or more along the horizontal axis of the flow stream, such as by 0.005 µm or more, such as by 0.01 µm or more, such as by 0.05 µm or more, such as by 0.1 µm or more, such as by 0.5 µm or more, such as by 1 µm or more, such as 2 µm or more, such as 3 µm or more, such as 5 µm or more, such as 10 µm or more, such as 25 µm or more, such 50 µm or more, such as 75 µm or more and including by 100 µm or more from the center of the flow stream along the horizontal axis.

In certain embodiments, the position of the wedged window is adjusted in response to the assessed alignment of the laser with the flow stream. For example, in some instances where the position of laser irradiation on the flow stream is determined to produce a light signal that is less than maximal, the wedged window may be displaced to the position which produces a maximal light signal amplitude. In these instances, methods may include mapping the spatially positioning of the wedged window (e.g., horizontal position, vertical position, angle of orientation) that produces the maximal light signal amplitude and matching the spatial position of the wedged window which produces the maximal light signal amplitude.

In other embodiments, the laser is adjusted in response to the assessed alignment of the laser with the flow stream. For example, in some instances where the position of laser irradiation on the flow stream is determined to produce a light signal that is less than maximal, the laser may be displaced to a position which produces a maximal light signal amplitude. In these instances, methods may include mapping the spatially positioning of the laser (e.g., horizontal position, vertical position, angle of orientation) that produces the maximal light signal amplitude and matching the spatial position of the laser which produces the maximal light signal amplitude.

In yet other embodiments, both the wedged window and the laser are adjusted in response to the assessed alignment of the laser with the flow stream. For example, where the position of laser irradiation on the flow stream is determined to produce a light signal that is less than maximal, both the laser and the wedged window are displaced to a position such that a maximal light signal amplitude is obtained. In these instances, the spatially positioning (e.g., horizontal position, vertical position, angle of orientation) of the laser and the wedged window are mapped and is matched with the position that provides for a maximal light signal amplitude.

The position of the irradiation by the laser on the flow stream (i.e., the laser beamspot position on the flow stream) may be adjusted by any convenient protocol, such as by directly moving (manually, mechanically or with a motor-driven displacement device) one or more of the laser and wedged window, moving support stages coupled to the laser or wedged window as well as changing the position, configuration or angle of orientation of one or more optical adjustment protocols (as described above). In some embodiments, the position of irradiation by the laser on the flow stream is adjusted by manually (e.g., by hand) adjusting one or more of the spatial position of the wedged window and the laser. In one example, the horizontal or vertical position or the angle of orientation of the wedged window may be manually adjusted. In another example, the horizontal or vertical position of the laser is manually adjusted. In yet another example, the horizontal or vertical position or angle of orientation of the wedged window is manually adjusted and the horizontal or vertical position of the laser is manually adjusted.

In other embodiments, the position of irradiation by the laser on the flow stream is adjusted by mechanically adjusting the spatial position of one or more of the wedged window and the laser. Any convenient mechanical actuator can be used to mechanically adjust the spatial position of the wedged window or laser, such as for example a mechanical leadscrew assembly or a mechanically operated geared translation device coupled to a support stage. In one example, the horizontal or vertical position or the angle of orientation of the wedged window is mechanically adjusted. In another example, the horizontal or vertical position of the laser is mechanically adjusted. In yet another example, the horizontal or vertical position or angle of orientation of the wedged window is mechanically adjusted and the horizontal or vertical position of the laser is mechanically adjusted.

In yet other embodiments, the position of irradiation by the laser on the flow stream is adjusted by adjusting the spatial position of one or more of the wedged window and the laser with a motor-driven displacement device. Any convenient motor-driven actuator can be used, such as for example a motor actuated displacement stage, motor driven leadscrew assembly, motor-operated geared actuation device employing a stepper motor, servo motor, brushless electric motor, brushed DC motor, micro-step drive motor, high resolution stepper motor, among other types of motors. In one example, the horizontal or vertical position or the angle of orientation of the wedge window is adjusted with a motor-driven displacement device. In another example, the horizontal or vertical position of the laser is adjusted with a motor-driven displacement device. In yet another example, the horizontal or vertical position or angle of orientation of the wedged window is adjusted with a motor-driven displacement device and the horizontal or vertical position of the laser is adjusted with a motor-driven displacement device.

In certain embodiments, the position of the irradiation by the laser on the flow stream (i.e., the laser beamspot position on the flow stream) is adjusted by changing the position or orientation of one or more optical adjustment components. For example, the orientation of the optical adjustment protocol (e.g., a mirror) may be changed to position the beam of laser light on a different part of the flow stream, such as by increasing the angle of the optical adjustment protocol by 5° or more, such as by 10° or more, such as by 15° or more, such as by 20° or more, such as by 30° or more, such as by 45° or more, such as by 60° or more and including by 75° or more. In certain embodiments, methods include adjusting the position of irradiation of light onto a different part of the flow stream by changing the angle of the mirror with respect to the flow stream by 5° or more, such as by 10° or more, such as by 15° or more, such as by 20° or more, such as by 30° or more, such as by 45° or more, such as by 60° or more and including by 75° or more.

In certain embodiments, methods include assessing alignment of a laser with a flow stream and automatically adjusting the wedged window so that irradiation by the laser on the flow stream is aligned. By "automatic" is meant that adjustments to the spatial position (e.g., horizontal or vertical position or angle of orientation) of the wedged window made in response to the light signal amplitudes or in response to a comparison between an observed light signal amplitude and a predetermined maximal light signal amplitude requires little to no human intervention or manual input. In certain embodiments, the position of irradiation by the laser on the flow stream is adjusted in accordance with the subject methods without any human intervention. For example, in certain embodiments, methods include automatically aligning a laser with a flow stream in a flow cytometer and without any input by the user of the flow cytometer by: detecting a light signal from the laser irradiated flow stream; calculating a light signal amplitude; comparing the observed light signal amplitude with a predetermined maximal light signal amplitude; and adjusting the spatial position of one or more of the wedged window and laser to match the position of laser irradiation on the flow stream with the position of the laser irradiation on the flow stream which produces the maximal light signal amplitude.

In some embodiments, after adjusting the spatial position of one or more of the wedged window and laser to match the position of laser irradiation which produces the maximal light signal amplitude, laser irradiation may be maintained in this position for a predetermined duration before reassessing alignment of the laser with the flow stream, such as for 1 minute or longer, such as 5 minutes or longer, such as 15 minutes or longer, such as 30 minutes or longer, such as 60 minutes or longer, such as for 6 hours or more, such as for 12 hours or more, such as for 24 hours or more, such as for 48 hours or more, such as for 72 hours or more and including maintaining the position of laser irradiation for 168 hours or more before reassessing alignment of the laser with the flow stream, or for some other interval.

In some embodiments, methods of the present disclosure include reassessing the alignment of the laser with the flow stream. The alignment of the laser with the flow stream may be reassessed at any time as desired, such as after a predetermined duration or in response to an event where it may be desirable to evaluate alignment of the laser with the flow stream. For example, the alignment of the laser with the flow stream may be reassessed every 5 minutes, every 10 minutes, every 30 minutes, every 60 minutes, every 6 hours, every 12 hours, every 24 hours, every 48 hours, every 72 hours, every 168 hours or some other interval. In other embodiments, the alignment of the laser with the flow stream may be reassessed after an event which might change the alignment of the laser with the flow stream. In one example, alignment of the laser with the flow stream is reassessed after the wedged window is changed or modified, such as where a new wedged window is installed or one or more additional wedged windows are added. In another example, alignment of the laser with the flow stream is reassessed if an optical adjustment component is changed, such as where a mirror, lens or other optical adjustment component is added or removed. In still another example, the alignment of the laser with the flow stream is reassessed after the laser is changed or modified, such as installing a new laser type of laser. In yet another example, the alignment of the laser with the flow stream is reassessed where the flow stream is changed, such as changing a flow cell nozzle in a flow cytometer. In other embodiments, the alignment of the laser with the flow stream may be assessed continuously. For example, the alignment of a laser with the flow stream in a flow cytometer may be continuously monitored by collecting real-time data.

In practicing methods according to embodiments of the disclosure, the flow stream is irradiated by the laser through the wedged window and light from the flow stream is collected and detected. Light from the flow stream may be forward scattered light, side scattered light, transmitted light, emitted light (e.g., fluorescence or phosphorescence) or a combination thereof. In some embodiments, methods include aligning the laser with the flow stream by collecting and detecting forward scattered light from the flow stream. In other embodiments, methods include aligning the laser with the flow stream by collecting and detecting side scattered light from the flow stream. In yet other embodiments, methods include aligning the laser with the flow stream by collecting and detecting light transmitted through the flow stream. In still other embodiments, methods include aligning the laser with the flow stream by collecting and detecting emitted light (e.g., fluorescence or phosphorescence) from the flow stream.

The flow stream may be irradiated at any suitable vertical position along the flow stream so long as light signals from the flow stream are sufficiently detected. In certain embodiments, the flow stream is a flow cytometer flow stream and the laser is configured to irradiate the flow stream at a position immediately adjacent to the flow cell nozzle orifice. In other embodiments, the flow stream is irradiated at a position downstream from the flow cell nozzle orifice, such as at a position 0.001 mm from the flow cell nozzle orifice, such as 0.005 mm or more, such as 0.01 mm or more, such as 0.05 mm or more, such as 0.1 mm or more, such as 0.5 mm or more, such as 1 mm or more, such as 2 mm or more, such as 5 mm or more and including 10 mm or more downstream from the flow cell nozzle orifice. The flow stream may be irradiated at one or more vertical positions, such as at 2 or more, such as at 3 or more, such as at 4 or more, such as at 5 or more and including irradiating the flow stream at 10 or more vertical positions.

Lasers of interest may include pulsed lasers or continuous wave lasers. For example, the laser may be a helium-neon laser, argon laser, krypton laser, xenon laser, nitrogen laser, CO₂ laser, CO laser, argon-fluorine (ArF) excimer laser, krypton-fluorine (KrF) excimer laser, xenon chlorine (XeCI) excimer laser or xenon-fluorine (XeF) excimer laser or a combination thereof. In others instances, the methods include aligning a dye laser with a flow stream, such as a stilbene, coumarin or rhodamine laser. In yet other instances, methods include aligning metal-vapor laser with a flow stream, such as a helium-cadmium (HeCd) laser, helium-mercury (HeHg) laser, helium-selenium (HeSe) laser, helium-silver (HeAg) laser, strontium laser, neon-copper (NeCu) laser, copper laser or gold laser and combinations thereof. In still other instances, methods include aligning a solid-state laser with a flow stream, such as a ruby laser, an Nd:YAG laser, NdCrYAG laser, Er:YAG laser, Nd:YLF laser, Nd:YVO₄ laser, Nd:YCa₄O(BO₃)₃ laser, Nd:YCOB laser, titanium sapphire laser, thulim YAG laser, ytterbium YAG laser, ytterbium₂O₃ laser or cerium doped lasers and combinations thereof.

Embodiments of the present disclosure may be employed to align one or more lasers with a flow stream, such as 2 or more lasers, such as 3 or more lasers, such as 4 or more lasers, such as 5 or more lasers and including 10 or more lasers. Any combination of types of lasers may be aligned with the flow stream. For example, in some embodiments, the methods include aligning an array of lasers with a flow stream, such as an array having one or more gas lasers, one or more dye lasers and one or more solid-state lasers. Each laser may be optically coupled to a separate and distinct wedged windowor all of the lasers may be optically coupled to a single wedged window, or a combination thereof.

Where more than one laser is being aligned with the flow stream, the flow stream may be irradiated with the lasers simultaneously or sequentially, or a combination thereof. For example, the flow stream may be simultaneously irradiated with each of the lasers through the wedged windows. In other embodiments, the flow stream is sequentially irradiated with each of the lasers through the wedged windows. Where more than one laser is employed to irradiate the flow stream sequentially, the time each laser irradiates the flow stream may independently be 0.001 microseconds or more, such as 0.01 microseconds or more, such as 0.1 microseconds or more, such as 1 microsecond or more, such as 5 microseconds or more, such as 10 microseconds or more, such as 30 microseconds or more and including 60 microseconds or more. For example, methods may include irradiating the flow stream with the laser for a duration which ranges from 0.001 microseconds to 100 microseconds, such as from 0.01 microseconds to 75 microseconds, such as from 0.1 microseconds to 50 microseconds, such as from 1 microsecond to 25 microseconds and including from 5 microseconds to 10 microseconds. In embodiments, the duration the flow stream is irradiated by each laser may be the same or different.

The time period between irradiation by each laser may also vary, as desired, being separated independently by a delay of 0.001 microseconds or more, such as 0.01 microseconds or more, such as 0.1 microseconds or more, such as 1 microsecond or more, such as 5 microseconds or more, such as by 10 microseconds or more, such as by 15 microseconds or more, such as by 30 microseconds or more and including by 60 microseconds or more. For example, the time period between irradiation by each laser may range from 0.001 microseconds to 60 microseconds, such as from 0.01 microseconds to 50 microseconds, such as from 0.1 microseconds to 35 microseconds, such as from 1 microsecond to 25 microseconds and including from 5 microseconds to 10 microseconds. In certain embodiments, the time period between irradiation by each laser is 10 microseconds. In embodiments where the flow stream is sequentially irradiated by more than two (i.e., 3 or more) lasers, the delay between irradiation by each laser may be the same or different.

To align the laser with the flow stream, the flow stream may be irradiated continuously or in discrete intervals. In some instances, methods include irradiating the the flow stream with the laser through the wedged windowcontinuously. In other instances, the flow stream is irradiated with the laser through the wedged windowin discrete intervals, such as irradiating every 0.001 millisecond, every 0.01 millisecond, every 0.1 millisecond, every 1 millisecond, every 10 milliseconds, every 100 milliseconds and including every 1000 milliseconds, or some other interval.

The light signals may be detected by any convenient positional sensing detecting protocol, including but not limited to photosensors or photodetectors, such as active-pixel sensors (APSs), quadrant photodiodes, image sensors, charge-coupled devices (CCDs), intensified charge-coupled devices (ICCDs), light emitting diodes, photon counters, bolometers, pyroelectric detectors, photoresistors, photovoltaic cells, photodiodes, photomultiplier tubes, phototransistors, quantum dot photoconductors or photodiodes and combinations thereof, among other photodetectors. In certain embodiments, the light signals are detected with a quadrant photodiode. Where the light signals are detected with a quadrant photodiode, the active detecting surface area of each region of the quadrant photodiode may vary, such as from 0.01 cm² to 10 cm², such as from 0.05 cm² to 9 cm², such as from, such as from 0.1 cm² to 8 cm², such as from 0.5 cm² to 7 cm² and including from 1 cm² to 5 cm². In some instances, the photodetector is a photodiode array having more than one photodiode, such as two or more photodiodes, such as three or more, such as five or more and including 10 or more photodiodes.

In certain embodiments, the detector is positioned apart in space from the the flow stream and light from the flow stream is propagated to the detector through an optical relay system, such as with fiber optics or a free space light relay system. For example, the optical relay system may be a fiber optics light relay bundle and light is conveyed through the fiber optics light relay bundle to the detector. Any fiber optics light relay system may be employed to propagate light to the detector. In certain embodiments, suitable fiber optics light relay systems for propagating light to the detector include, but are not limited to, fiber optics light relay systems such as those described in United States Patent No. 6,809,804. In other embodiments, the optical relay system is a free-space light relay system. The phrase "free-space light relay" is used herein in its conventional sense to refer to light propagation that employs a configuration of one or more optical components to direct light to the detector through free-space. In certain embodiments, the free-space light relay system includes a housing having a proximal end and a distal end, the proximal end being coupled to the detector. The free-space relay system may include any combination of different optical adjustment components, such as one or more of lenses, mirrors, slits, pinholes, wavelength separators, or a combination thereof. For example, in some embodiments, free-space light relay systems of interest include one or more focusing lens. In other embodiments, the subject free-space light relay systems include one or more mirrors. In yet other embodiments, the free-space light relay system includes a collimating lens. In certain embodiments, suitable free-space light relay systems for propagating light to the detector, but are not limited to, light relay systems such as those described in United States Patent Nos. 7,643,142; 7,728,974 and 8,223,445.

Aligning a laser with a flow stream through a wedged window according to certain embodiments also includes measuring light from the flow stream at one or more wavelengths, such as at 2 or more wavelengths, such as at 5 or more different wavelengths, such as at 10 or more different wavelengths, such as at 25 or more different wavelengths, such as at 50 or more different wavelengths, such as at 100 or more different wavelengths, such as at 200 or more different wavelengths, such as at 300 or more different wavelengths and including measuring light from the flow stream at 400 or more different wavelengths. In some embodiments, methods include measuring light over a range of wavelengths (e.g., 200 nm - 1000 nm). For example, methods may include collecting spectra of light over one or more of the wavelength ranges of 200 nm - 1000 nm. In yet other embodiments, methods include measuring light from the flow stream at one or more specific wavelengths. For example, the light may be measured at one or more of 450 nm, 518 nm, 519 nm, 561 nm, 578 nm, 605 nm, 607 nm, 625 nm, 650 nm, 660 nm, 667 nm, 670 nm, 668 nm, 695 nm, 710 nm, 723 nm, 780 nm, 785 nm, 647 nm, 617 nm and any combinations thereof. In certain embodiments, methods including measuring wavelengths of light which correspond to the fluorescence peak wavelength of certain fluorophores.

Light from the flow stream may be measured continuously or in discrete intervals. In some instances, methods include taking measurements of the light continuously. In other instances, the light is measured in discrete intervals, such as measuring light every 0.001 millisecond, every 0.01 millisecond, every 0.1 millisecond, every 1 millisecond, every 10 milliseconds, every 100 milliseconds and including every 1000 milliseconds, or some other interval.

Measurements of the light may be taken one or more times during the subject methods, such as 2 or more times, such as 3 or more times, such as 5 or more times and including 10 or more times. In certain embodiments, the light propagation is measured 2 or more times, with the data in certain instances being averaged.

In practicing the subject methods, a flow stream is irradiated with a laser through the wedged window. The flow rate of the flow stream according to embodiments may vary, e.g., depending on the intensity of the laser light and may be 1 nL/min or more, such as 2 nL/min or more, such as 3 nL/min or more, such as 5 nL/min or more, such as 10 nL/min or more, such as 25 nL/min or more, such as 50 nL/min or more, such as 75 nL/min or more, such as 100 nL/min or more, such as 250 nL/min or more, such as 500 nL/min or more, such as 750 nL/min or more and including 1000 nL/min or more. In certain embodiments, the flow rate of the flow stream in the subject methods ranges from 1 nL/min to 500 nL/min, such as from 1 nL/min to 250 nL/min, such as from 1 nL/min to 100 nL/min, such as from 2 nL/min to 90 nL/min, such as from 3 nL/min to 80 nL/min, such as from 4 nL/min to 70 nL/min, such as from 5 nL/min to 60 nL/min and including rom 10 nL/min to 50 nL/min. In certain embodiments, the flow rate of the flow stream is from 5 nL/min to 6 nL/min.

In certain embodiments, methods further include irradiating a sample in the flow stream (e.g., in a flow cytometer) with the laser that has been aligned with the flow stream (as described above). In some embodiments, the sample is a biological sample. The term "biological sample" is used in its conventional sense to refer to a whole organism, plant, fungi or a subset of animal tissues, cells or component parts which may in certain instances be found in blood, mucus, lymphatic fluid, synovial fluid, cerebrospinal fluid, saliva, bronchoalveolar lavage, amniotic fluid, amniotic cord blood, urine, vaginal fluid and semen. As such, a "biological sample" refers to both the native organism or a subset of its tissues as well as to a homogenate, lysate or extract prepared from the organism or a subset of its tissues, including but not limited to, for example, plasma, serum, spinal fluid, lymph fluid, sections of the skin, respiratory, gastrointestinal, cardiovascular, and genitourinary tracts, tears, saliva, milk, blood cells, tumors, organs. Biological samples may be any type of organismic tissue, including both healthy and diseased tissue (e.g., cancerous, malignant, necrotic, etc.). In certain embodiments, the biological sample is a liquid sample, such as blood or derivative thereof, e.g., plasma, or other biological liquid sample, e.g., tears, urine, semen, etc., where in some instances the sample is a blood sample, including whole blood, such as blood obtained from venipuncture or fingerstick (where the blood may or may not be combined with any reagents prior to assay, such as preservatives, anticoagulants, etc.).

In certain embodiments the source of the sample is a "mammal" or "mammalian", where these terms are used broadly to describe organisms which are within the class mammalia, including the orders carnivore (e.g., dogs and cats), rodentia (e.g., mice, guinea pigs, and rats), and primates (e.g., humans, chimpanzees, and monkeys). In some instances, the subjects are humans. The methods may be applied to samples obtained from human subjects of both genders and at any stage of development (i.e., neonates, infant, juvenile, adolescent, adult), where in certain embodiments the human subject is a juvenile, adolescent or adult. While the present invention may be applied to samples from a human subject, it is to be understood that the methods may also be carried-out on samples from other animal subjects (that is, in "non-human subjects") such as, but not limited to, birds, mice, rats, dogs, cats, livestock and horses.

In certain embodiments, the biological sample contains cells. Cells that may be present in the sample include eukaryotic cells (e.g., mammalian cells) and/or prokaryotic cells (e.g., bacterial cells or archaeal cells). Samples may be obtained from an *in vitro* source (e.g., a suspension of cells from laboratory cells grown in culture) or from an *in vivo* source (e.g., a mammalian subject, a human subject, etc.). In some embodiments, the cellular sample is obtained from an *in vitro* source. *In vitro* sources include, but are not limited to, prokaryotic (e.g., bacterial, archaeal) cell cultures, environmental samples that contain prokaryotic and/or eukaryotic (e.g., mammalian, protest, fungal, etc.) cells, eukaryotic cell cultures (e.g., cultures of established cell lines, cultures of known or purchased cell lines, cultures of immortalized cell lines, cultures of primary cells, cultures of laboratory yeast, etc.), tissue cultures, and the like.

Where the biological sample includes cells, methods of the present disclosure may include characterizing components of the cells, such as cell fragments, fragmented cell membranes, organelles, dead or lysed cells. In some embodiments, methods include characterizing the extracellular vesicles of the cells. Characterizing the extracellular vesicles of the cells may include identifying the type of extracellular vesicles in the cells or determining the size of the extracellular vesicles in the cells.

The sample in the flow stream may be irradiated with aligned laser continuously or in discrete intervals. In some instances, methods include irradiating the sample in the flow stream with the light source continuously. In other instances, the sample in the flow stream is irradiated with the light source in discrete intervals, such as irradiating every 0.001 millisecond, every 0.01 millisecond, every 0.1 millisecond, every 1 millisecond, every 10 milliseconds, every 100 milliseconds and including every 1000 milliseconds, or some other interval.

The flow rate of the sample in the flow stream may vary, e.g., depending on the intensity of the light and may be 1 uL/min or more, such as 2 uL/min or more, such as 3 uL/min or more, such as 5 uL/min or more, such as 10 uL/min or more, such as 25 uL/min or more, such as 50 uL/min or more, such as 75 uL/min or more, such as 100 uL/min or more, such as 250 uL/min or more, such as 500 uL/min or more, such as 750 uL/min or more and including 1000 uL/min or more. In certain embodiments, the flow rate of the flow stream in the subject methods ranges from 1 uL/min to 500 uL/min, such as from 1 uL/min to 250 uL/min, such as from 1 uL/min to 100 uL/min, such as from 2 uL/min to 90 uL/min, such as from 3 uL/min to 80 uL/min, such as from 4 uL/min to 70 uL/min, such as from 5 uL/min to 60 uL/min and including rom 10 uL/min to 50 uL/min. In certain embodiments, the flow rate of the flow stream is from 5 uL/min to 6 uL/min.

Methods also include detecting light from the sample in the flow stream. The light detected may be side scattered light, forward scattered light, emitted light or combination thereof. Suitable light detecting protocols, include but are not limited to optical sensors or photodetectors, such as active-pixel sensors (APSs), avalanche photodiode, image sensors, charge-coupled devices (CCDs), intensified charge-coupled devices (ICCDs), light emitting diodes, photon counters, bolometers, pyroelectric detectors, photoresistors, photovoltaic cells, photodiodes, photomultiplier tubes, phototransistors, quantum dot photoconductors or photodiodes and combinations thereof, among other photodetectors. In certain embodiments, light from the irradiated flow stream at the sample interrogation region of the particle sorting module is measured with a charge-coupled device (CCD), semiconductor charge-coupled devices (CCD), active pixel sensors (APS), complementary metal-oxide semiconductor (CMOS) image sensors or N-type metal-oxide semiconductor (NMOS) image sensors. In certain embodiments, light is measured with a charge-coupled device (CCD).

In some embodiments, light (e.g., forward scattered light, side scattered light, emitted light, etc.) is detected directly from the sample in the flow stream. In other embodiments, light from the sample in the flow stream is propagated to a detector with one or more optical adjustment components. By "optical adjustment" is meant that light from the sample in the flow stream is changed as desired. For example, the beam path, direction, focus or collimation of the light from the sample in the flow stream may be changed with an optical adjustment component. In some instances, the dimensions of the light collected from the sample in the flow stream is adjusted, such as increasing the dimensions by 5% or more, such as by 10% or more, such as by 25% or more, such as by 50% or more and including increasing the dimensions by 75% or more or focusing the light so as to reduce the light dimensions, such as by 5% or greater, such as by 10% or greater, such as by 25% or greater, such as by 50% or greater and including reducing the dimensions by 75% or greater. In other instances, optical adjustment includes collimating the light. The term "collimate" is used in its conventional sense to refer to the optically adjusting the collinearity of light propagation or reducing divergence by the light of from a common axis of propagation. In some instances, collimating includes narrowing the spatial cross section of a light beam. In certain embodiments, the optical adjustment component is a wavelength separator. The term "wavelength separator" is used herein in its conventional sense to refer to an optical protocol for separating polychromatic light into its component wavelengths. Wavelength separation, according to certain embodiments, may include selectively passing or blocking specific wavelengths or wavelength ranges of the polychromatic light. Wavelength separation protocols of interest include, but are not limited to, colored glass, bandpass filters, interference filters, dichroic mirrors, diffraction gratings, monochromators and combinations thereof, among other wavelength separating protocols. In some embodiments, the wavelength separator is an optical filter. For example, the optical filter may be a bandpass filter having minimum bandwidths ranging from 2 nm to 100 nm, such as from 3 nm to 95 nm, such as from 5 nm to 95 nm, such as from 10 nm to 90 nm, such as from 12 nm to 85 nm, such as from 15 nm to 80 nm and including bandpass filters having minimum bandwidths ranging from 20 nm to 50 nm.

Methods according to certain embodiments also include measuring light from the sample in the flow stream at one or more wavelengths, such as at 2 or more wavelengths, such as at 5 or more different wavelengths, such as at 10 or more different wavelengths, such as at 25 or more different wavelengths, such as at 50 or more different wavelengths, such as at 100 or more different wavelengths, such as at 200 or more different wavelengths, such as at 300 or more different wavelengths and including measuring light emitted by a sample in the flow stream at 400 or more different wavelengths. In some embodiments, methods include measuring the collected light over a range of wavelengths (e.g., 200 nm - 1000 nm). For example, methods may include collecting spectra of light over one or more of the wavelength ranges of 200 nm - 1000 nm. In yet other embodiments, methods include measuring collected light at one or more specific wavelengths. For example, the collected light may be measured at one or more of 450 nm, 518 nm, 519 nm, 561 nm, 578 nm, 605 nm, 607 nm, 625 nm, 650 nm, 660 nm, 667 nm, 670 nm, 668 nm, 695 nm, 710 nm, 723 nm, 780 nm, 785 nm, 647 nm, 617 nm and any combinations thereof. In certain embodiments, methods including measuring wavelengths of light which correspond to the fluorescence peak wavelength of certain fluorophores.

Light from the sample in the flow stream may be measured continuously or in discrete intervals. In some instances, methods include taking measurements of the light continuously. In other instances, the light is measured in discrete intervals, such as measuring light every 0.001 millisecond, every 0.01 millisecond, every 0.1 millisecond, every 1 millisecond, every 10 milliseconds, every 100 milliseconds and including every 1000 milliseconds, or some other interval.

Measurements of the collected light from the sample in the flow steram may be taken one or more times during the subject methods, such as 2 or more times, such as 3 or more times, such as 5 or more times and including 10 or more times. In certain embodiments, the light propagation is measured 2 or more times, with the data in certain instances being averaged.

Methods in certain embodiments also include data acquisition, analysis and recording, such as with a computer, where multiple data channels record data from the sample as it passes through the detection region of the system. In these embodiments, analysis may include classifying and counting cells or components of cells (extracellular vesicles) such that each component is present as a set of digitized parameter values. The subject systems may be set to trigger on a selected parameter in order to distinguish the particles of interest from background and noise. "Trigger" refers to a preset threshold for detection of a parameter and may be used as a means for detecting passage of a component of interest through the detection region. Detection of an event that exceeds the threshold for the selected parameter triggers acquisition of data for the sample component. Data is not acquired for components in the medium being assayed which cause a response below the threshold.

### SYSTEMS FOR ALIGNING A LASER WITH A FLOW STREAM

As summarized above, aspects of the present disclosure include systems having a wedged window for aligning a laser with a flow stream. In embodiments, systems include a flow cell configured to propagate a sample in a flow stream, a spatially adjustable wedged window, a laser configured to irradiate the flow stream through the wedged window and a sensor configured to detect light signals from the flow stream to align the laser with the flow stream. As discussed above, wedged windows according to embodiments have a wedge angle where a change in the angle of incident laser light results in only a small change in the angle of deviation. The wedged windows are configured for fine-tune positioning of a laser beam onto a flow stream. In some embodiments, the wedged window has a wedge angle where a change in the angle of incident laser light produces a deviation in the laser beam angle by 10% or less, such as by 9% or less, such as by 8% or less, such as by 7% or less, such as by 6% or less, such as by 5% or less, such as by 4% or less, such as by 3% or less, such as by 2% or less, such as by 1% or less, such as by 0.5% or less, such as by 0.1% or less, such as by 0.05% or less and including by 0.01% or less. For example, where the incident angle of laser light is changed by 25 arc minutes or more, the angle of deviation changes by 10 arc minutes or less, such as by 9 arc minutes or less, such as by 8 arc minutes or less, such as by 7 arc minutes or less, such as by 6 arc minutes or less, such as by 5 arc minutes or less, such as by 4 arc minutes or less, such as by 3 arc minute or less, such as by 2 arc minutes or less, such as by 1 arc minute or less, such as by 0.5 arc minutes or less, such as by 0.1 arc minutes or less, such as by 0.05 arc minutes or less and including by 0.01° or less.

In certain instances, wedged windows have a wedge angle such that when the position of incident laser irradiation is moved (e.g., along the X-Y plane) the position of the beamspot on the flow stream (e.g., along the horizontal axis of the flow stream) is changed by 10% or less of the change in distance of the position of incident laser irradiation, such as by 9% or less, such as by 8% or less, such as by 7% or less, such as by 6% or less, such as by 5% or less, such as by 4% or less, such as by 3% or less, such as by 2% or less, such as by 1% or less, such as by 0.5% or less, such as by 0.1% or less, such as by 0.05% or less and including by 0.01% or less of the change in distance of the position of incident laser irradiation. For example, where the position of incident laser irradiation is moved by 1 mm, the position of the beamspot on the flow stream when irradiated through the subject wedged window is changed by 0.1 mm or less, such as by 0.09 mm or less, such as by 0.08 mm or less, such as by 0.07 mm or less, such as by 0.06 mm or less, such as by 0.05 mm or less, such as by 0.04 mm or less, such as by 0.03 mm or less, such as by 0.02 mm or less, such as by 0.01 mm or less, such as by 0.005 mm or less and including by 0.001 mm or less.

In other instances, wedged windows have a wedge angle such that when the wedged window is rotated (e.g., in an X-Y plane, in an X-Z plane or an Y-Z plane), the position of the beamspot on the flow stream (e.g., along the horizontal axis of the flow stream) is changed by 10% or less of the change in distance of the position of incident laser irradiation, such as by 9% or less, such as by 8% or less, such as by 7% or less, such as by 6% or less, such as by 5% or less, such as by 4% or less, such as by 3% or less, such as by 2% or less, such as by 1% or less, such as by 0.5% or less, such as by 0.1% or less, such as by 0.05% or less and including by 0.01% or less of the change in distance of the position of incident laser irradiation. For example, where the the wedged window is rotated (e.g., in an X-Y plane, in an X-Z plane or an Y-Z plane) by an angle of from 10 arc minute to 120 arc minutes, the position of the beamspot on the flow stream is changed by 0.1 mm or less, such as by 0.09 mm or less, such as by 0.08 mm or less, such as by 0.07 mm or less, such as by 0.06 mm or less, such as by 0.05 mm or less, such as by 0.04 mm or less, such as by 0.03 mm or less, such as by 0.02 mm or less, such as by 0.01 mm or less, such as by 0.005 mm or less and including by 0.001 mm or less.

Wedged windows, according to embodiments, may vary depending on the spatial position of the laser and the desired position of the beamspot on the flow stream. Wedged windows of interest may be any suitable shape, including but not limited to rectilinear cross sectional shapes, e.g., squares, rectangles, trapezoids, triangles, hexagons, etc., curvilinear cross-sectional shapes, e.g., circles, ovals, etc., as well as irregular shapes, e.g., a parabolic bottom portion coupled to a planar top portion, etc. A single wedged window is used whereby the flow stream is irradiated with the laser through the single wedged window.

The wedge angle of the subject wedged windows may vary, ranging from 5 arc minute to 120 arc minute, such as from 10 arc minute to 115 arc minute, such as from 15 arc minute to 110 arc minute, such as from 20 arc minute to 105 arc minute, such as from 25 arc minute to 100 arc minute, such as from 30 arc minute to 95 arc minute, such as from 35 arc minute to 90 arc minute, such as from 40 arc minute to 85 arc minute and including from 30 arc minute to 60 arc minute. In some embodiments, the wedge angle is 30 arc minute. In other embodiments, the wedge angle is 20 arc minute. In yet other embodiments, the wedge angle is 10 arc minute. In some embodiments, the wedge angle of the wedged window is 120 arc minute or less, such as 115 arc minute or less, such as 110 arc minute or less, such as 105 arc minute or less, such as 100 arc minute or less, such as 95 arc minute or less, such as 90 arc minute or less, such as 85 arc minute or less, such as 80 arc minute or less, such as 75 arc minute or less, such as 70 arc minute or less, such as 65 arc minute or less, and including wedge windows having a wedge angle of 60 arc minute or less.

The subject wedged windows provide for, in embodiments, a laser beam deviation, ranging from 0.001 arc minute to 10 arc minute, such as from 0.005 arc minute to 9 arc minute, such as from 0.01 arc minute to 8 arc minute, such as from 0.05 arc minute to 7 arc minute, such as from 0.1 arc minute to 6 arc minute, such as from 0.5 arc minute to 5 arc minute and including from 1 arc minute to 3 arc minute. In some embodiments, the wedged windows provide for a laser beam deviation that is 5 arc minute or less, such as 4 arc minute or less, such as 3 arc minute or less, such as 2 arc minute or less, such as 1 arc minute or less, such as 0.5 arc minute or less, such as 0.1 arc minute or less, such as 0.05 arc minute or less, such as 0.01 arc minute or less, such as 0.005 arc minute or less, such as 0.001 arc minute or less and including providing for a laser beam deviation angle of 0.0001 arc minute or less.

In some embodiments, the wedged window has a refractive index that ranges from 1 to 3, such as from 1.1 to 2.9, such as from 1.2 to 2.8, such as from 1.3 to 2.7, such as from 1.4 to 2.6, such as from 1.5 to 2.7, such as from 1.6 to 2.6, such as from 1.7 to 2.5, such as from 1.8 to 2.4 and including from 1.9 to 2.3. Wedged windows of interest may be formed from any suitable material including but not limited to glass (e.g., N-SF10, N-SF11, N-SF57, N-BK7, N-LAK21 or N-LAF35 glass), silica (e.g., fused silica), quartz, crystal (e.g., CaF₂ crystal), zinc selenide (ZnSe), F₂, germanium (Ge) titanate (e.g., S-TIH11), borosilicate (e.g., BK7). In some embodiments, the wedged window has a transperancy window of from 150 nm to 5 µm; from 180 nm to 8 µm, from 185 nm to 2.1 µm, from 200 nm to 6 µm, from 200 nm to 11 µm, from 250 nm to 1.6 µm, from 350 nm to 2 µm, from 600 nm to 16 µm, from 1.2 µm to 8 µm, from 2 µm to 16 µm or some other wavelength range.

In embodiments, the subject systems include one or more lasers. Lasers of interest may include pulsed lasers or continuous wave lasers. The type and number of lasers used in the subject methods may vary and may be a gas laser, such as a helium-neon laser, argon laser, krypton laser, xenon laser, nitrogen laser, CO₂ laser, CO laser, argon-fluorine (ArF) excimer laser, krypton-fluorine (KrF) excimer laser, xenon chlorine (XeCl) excimer laser or xenon-fluorine (XeF) excimer laser or a combination thereof. In others instances, the methods include irradiating the acousto-optic device with a dye laser, such as a stilbene, coumarin or rhodamine laser. In yet other instances, methods include irradiating the acousto-optic device with a metal-vapor laser, such as a helium-cadmium (HeCd) laser, helium-mercury (HeHg) laser, helium-selenium (HeSe) laser, helium-silver (HeAg) laser, strontium laser, neon-copper (NeCu) laser, copper laser or gold laser and combinations thereof. In still other instances, methods include irradiating the acousto-optic device with a solid-state laser, such as a ruby laser, an Nd:YAG laser, NdCrYAG laser, Er:YAG laser, Nd:YLF laser, Nd:YVO₄ laser, Nd:YCa₄O(BO₃)₃ laser, Nd:YCOB laser, titanium sapphire laser, thulim YAG laser, ytterbium YAG laser, ytterbium₂O₃ laser or cerium doped lasers and combinations thereof. In still other instances, methods include irradiating the acousto-optic device with a semiconductor diode laser, optically pumped semiconductor laser (OPSL), or a frequency doubled- or frequency tripled implementation of any of the above mentioned lasers.

The wedged window in systems of interest may be positioned 0.001 mm or more from the laser, such as 0.005 mm or more, such as 0.01 mm or more, such as 0.05 mm or more, such as 0.1 mm or more, such as 0.5 mm or more, such as 1 mm or more, such as 5 mm or more, such as 10 mm or more, such as 25 mm or more and including at a distance of 100 mm or more from the laser. Likewise, the wedged window may be positioned with respect to the laser at any suitable angle, as described above, such as where the incident angle of irradiation by the laser ranges from 10° to 90°, such as from 15° to 85°, such as from 20° to 80°, such as from 25° to 75° and including from 30° to 60°.

The wedged window may also be positioned 0.001 mm or more from the flow stream, such as 0.005 mm or more, such as 0.01 mm or more, such as 0.05 mm or more, such as 0.1 mm or more, such as 0.5 mm or more, such as 1 mm or more, such as 5 mm or more, such as 10 mm or more, such as 25 mm or more and including at a distance of 100 mm or more from the flow stream. The wedged window may be positioned at any angle with respect to the flow stream, as described above, such as where the incident angle of irradiation by the laser ranges from 10° to 90°, such as from 15° to 85°, such as from 20° to 80°, such as from 25° to 75° and including from 30° to 60°.

Depending on the spatial width of irradiation on the flow stream by the laser desired, systems of interest may also include one or more optical adjustment protocols. As discussed above, the term "optical adjustment" refers to any device that is capable of changing the spatial width irradiation or some other characteristic of irradiation from the laser light, such as for example, irradiation direction, wavelength, beam profile, beam width, beam intensity, focal point and pulse width. For example, systems may include an optical adjustment protocol that increases or decreases the spatial width of irradiation of the laser light. In some instances, optical adjustment is a magnification protocol configured to increase the spatial width of irradiation by the laser, such as by 1% or greater, such as by 5% or greater, such as by 10% or greater, such as by 25% or greater, such as by 50% or greater and including a magnification protocol that increases width of irradiation by the laser by 75% or greater. In other instances, optical adjustment is a de-magnification protocol configured to decrease the spatial width of irradiation by the laser, such as by 1% or greater, such as by 5% or greater, such as by 10% or greater, such as by 25% or greater, such as by 50% or greater and including a de-magnification protocol that decreases the width of irradiation by the laser by 75% or greater. In still other instances, the optical adjustment protocol is a collimating protocol.

In embodiments, optical adjustment protocols may be any convenient device which adjusts one or more characteristics of the laser, including but not limited to lenses, mirrors, filters, fiber optics, wavelength separators, pinholes, slits, collimating protocols and combinations thereof. In certain embodiments, systems of interest include one or more focusing lenses. The focusing lens, in one example may be a de-magnifying lens. In another example, the focusing lens is a magnifying lens. In other embodiments, systems of interest include one or more mirrors. In still other embodiments, systems of interest include fiber optics.

According to the invention, the wedged window is spatially adjustable, wherein the wedged window may be adjusted to change angle of orientation of the wedged window. In some disclosed examples not forming part of the invention, the wedged window is configured to be spatially adjustable and configured to change the horizontal position of the wedged window (e.g., in an X-Y plane along a horizontal axis of the flow stream). For example, the horizontal position of the wedged window may be moved by 0.0001 mm or more, such as by 0.0005 mm or more, such as by 0.001 mm or more, such as by 0.005 mm or more, such as by 0.01 mm or more, such as by 0.05 mm or more, such as by 0.1 mm or more, such as by 0.5 mm or more, such as by 1 mm or more, such as by 2 mm or more, such as by 3 mm or more, such as by 4 mm or more, such as by 5 mm or more, such as by 10 mm or more and including moving the horizontal position of the wedged window by 25 mm or more.

In other disclosed examples not forming part of the invention, the wedged window is spatially adjustable and configured to change the vertical position of the wedged window (e.g., along the longitudinal axis of the flow stream) For example, the vertical position of the wedged window may be moved by 0.0001 mm or more, such as by 0.0005 mm or more, such as by 0.001 mm or more, such as by 0.005 mm or more, such as by 0.01 mm or more, such as by 0.05 mm or more, such as by 0.1 mm or more, such as by 0.5 mm or more, such as by 1 mm or more, such as by 2 mm or more, such as by 3 mm or more, such as by 4 mm or more, such as by 5 mm or more, such as by 10 mm or more and including moving the vertical position of the wedged window by 25 mm or more (e.g., along the longitudinal axis of the flow stream).

According to the invention, the wedged window is spatially adjustable and configured to change the angle of orientation of the wedged window. For example, the wedged window may be a rotated (e.g., in the X-Y plane, X-Z plane or Y-Z plane) by 0.0001° or more, such as by 0.0005° or more, such as by 0.001° or more, such as by 0.005° or more, such as by 0.01° or more, such as by 0.05° or more, such as by 0.1° or more, such as by 0.2° or more, such as by 0.3° or more, such as by 0.4° or more, such as by 0.5° or more, such as by 1° or more, such as by 2° or more, such as by 3° or more, such as by 4° or more, such as by 5° or more, such as by 10° or more, such as by 15° or more, such as by 20° or more, such as by 25° or more, such as by 30° or more and including by rotating the wedged window by 45° or more.. In certain embodiments, the wedged window is configured to be rotated (e.g., in the X-Y plane, X-Z plane or Y-Z plane) by 0.001 arc minute or more, such as by 0.005 arc minute or more, such as by 0.01 arc minute or more, such as by 0.05 arc minute or more, such as by 0.1 arc minute or more, such as by 0.5 arc minute or more, such as by 1 arc minute or more, such as by 2 arc minute or more, such as by 3 arc minute or more, such as by 4 arc minute or more, such as by 5 arc minute or more, such as by 6 arc minute or more, such as by 7 arc minute or more, such as by 8 arc minute or more, such as by 9 arc minute or more and including by 10 arc minute or more. In certain instances, the wedged window is configured for fine tuning the laser beam position on the flow stream and is configured to rotate (e.g., in the X-Y plane, X-Z plane or Y-Z plane) by 5 arc minute or less, such as by 4.5 arc minute or less, such as by 4 arc minute or less, such as by 3.5 arc minute or less, such as by 3 arc minute or less, such as by 2.5 arc minute or less, such as by 2 arc minute or less, such as by 1.5 arc minute or less, such as by 1 arc minute or less, such as by 0.5 arc minute or less, such as by 0.1 arc minute or less, such as by 0.05 arc minute or less, such as by 0.01 arc minute or less, such as by 0.005 arc minute or less and including by 0.001 arc minute or less.

The wedged window is configured to be spatially adjustable continuously or in discrete increments, such as in increments of 0.001 mm or more, such as 0.005 mm or more, such as 0.01 mm or more, such as 0.05 mm or more, such as 0.1 mm or more, such as 0.5 mm or more, such as 1 mm or more, such as 2 mm or more and including displacing the wedged window along the horizontal axis of the flow stream in increments of 5 mm or more. In another example, the wedged window is displaced along the vertical axis of flow stream in discrete increments, such as in increments of 0.001 mm or more, such as 0.005 mm or more, such as 0.01 mm or more, such as 0.05 mm or more, such as 0.1 mm or more, such as 0.5 mm or more, such as 1 mm or more, such as 2 mm or more and including displacing the wedged window along the vertical axis of the flow stream in increments of 5 mm or more. In yet another example, the angle of orientation of the wedged window is adjustable in discrete increments, such as in increments of 0.1° or more, such as 0.2° or more, such as 0.3° or more, such as 0.4° or more, such as 0.5° or more, such as 1° or more, such as 2° or more, such as 3° or more, such as 4° or more and including 5° or more. In still another example, the wedged window is configured for rotation in discrete increments, such as in increments of 0.0001 arc minute or more, such as 0.0005 arc minute or more, such as 0.001 arc minute or more, such as 0.005 arc minute or more, such as 0.01 arc minute or more, such as 0.05 arc minute or more, such as 0.1 arc minute or more, such as 0.5 arc minute or more, such as 1 arc minute or more, such as 2 arc minute or more, such as 3 arc minute or more, such as 4 arc minute or more and including 5 arc minute or more.

In some embodiments, the wedged window is movable (e.g., manually, mechanically or with a motor-driven displacement device). In other embodiments, the wedged window is coupled to a support stage that is movable. In some instance, the wedged window is configured to be moved manually. In other instances, the wedged window is configured to be moved mechanically, such as being directly coupled to a mechanical leadscrew assembly or a mechanically operated geared translation device or where the mechanical leadscrew assembly or a mechanically operated geared translation device are coupled to the support stage. In yet other instances, the wedged window is configured to be moved with a motor-driven displacement device, such as where the wedged window is coupled to a motor actuated displacement stage, motor driven leadscrew assembly, motor-operated geared actuation device employing a stepper motor, servo motor, brushless electric motor, brushed DC motor, micro-step drive motor, high resolution stepper motor, among other types of motors.

In some embodiments, optical adjustment components are movable. For instance, in one example a mirror may be moved to adjust laser alignment with the flow stream. In some instances, the optical adjustment component is movable in two dimensions, such as in an X-Y plane orthogonal to the axis of the flow stream. In other instances, the optical adjustment component is movable in three dimensions. In certain embodiments, the optical adjustment component is a mirror configured to be moved to adjust the position of irradiation on the flow stream by the light source. In some embodiments, the mirror may be configured to be moved in an X-Y plane such as along the axis of the flow stream. In other embodiments, the mirror is configured to change angles, such as tilted with respect the light stream or the flow stream. For example, systems may be configured to change the position of irradiation of light onto a different part of the flow stream by changing the angle of the mirror with respect to the flow stream by 5° or more, such as by 10° or more, such as by 15° or more, such as by 20° or more, such as by 30° or more, such as by 45° or more, such as by 60° or more and including by 75° or more.

Where the optical adjustment component (e.g., mirror) is configured to move, the optical adjustment component may be configured to be moved continuously or in discrete intervals. In some embodiments, movement of the optical adjustment component is continuous. In other embodiments, the optical adjustment component is movable in discrete intervals, such as for example in 0.01 micron or greater increments, such as 0.05 micron or greater, such as 0.1 micron or greater, such as 0.5 micron or greater, such as 1 micron or greater, such as 10 micron or greater, such as 100 microns or greater, such as 500 microns or greater, such as 1 mm or greater, such as 5 mm or greater, such as 10 mm or greater and including 25 mm or greater increments.

Any displacement protocol may be employed to move optical adjustment component structures, such as coupled to a movable support stage or directly with a motor actuated translation stage, leadscrew translation assembly, geared translation device, such as those employing a stepper motor, servo motor, brushless electric motor, brushed DC motor, micro-step drive motor, high resolution stepper motor, among other types of motors.

The laser may be configured to irradiate continuously or in discrete intervals. In some instances, systems include a laser that is configured to irradiate continuously, such as with a continuous wave laser that continuously irradiates the flow stream at the interrogation point in a flow cytometer. In other instances, systems of interest include a laser that is configured to irradiate the flow stream at discrete intervals, such as every 0.001 milliseconds, every 0.01 milliseconds, every 0.1 milliseconds, every 1 millisecond, every 10 milliseconds, every 100 milliseconds and including every 1000 milliseconds, or some other interval. Where the laser is configured to irradiate at discrete intervals, systems may include one or more additional components to provide for intermittent irradiation with the laser. For example, the subject systems in these embodiments may include one or more laser beam choppers, manually or computer controlled beam stops for blocking and exposing the flow stream to the laser.

In certain embodiments, systems include one or more support stages coupled to the laser or wedged window for adjusting the position of the laser or wedged window. Suitable support stages may be any convenient mounting device configured to hold in place the laser or wedged window and may include a planar substrate, contoured mounting devices, cylindrical or tubular support structures, laser holders, among other types of support structures. In some instances, the support stage is a mount for the wedged window. In other instances, the support stage is a mount for the laser. The number of support stages in the subject systems may vary, as desired, such as two or more, such as three or more, such as four or more and including five or more support stages. In certain embodiments, systems of interest include one support stage, such as a support stage having a mounted wedged window.

In some embodiments, support stages are movable. In some instances, the support stage is movable in two dimensions, such as in an X-Y plane orthogonal to the axis of the flow stream. In other instances, the support structure is movable in three dimensions. Where the support stage is configured to move, the support stage may be configured to be moved continuously or in discrete intervals. In some embodiments, the support stage is movable by continuous motion. In other embodiments, the support stage is movable in discrete intervals, such as for example in 0.01 micron or greater increments, such as 0.05 micron or greater, such as 0.1 micron or greater, such as 0.5 micron or greater, such as 1 micron or greater, such as 10 micron or greater, such as 100 microns or greater, such as 500 microns or greater, such as 1 mm or greater, such as 5 mm or greater, such as 10 mm or greater and including 25 mm or greater increments.

Any displacement protocol may be employed to move the support structures, such as moving the support stages with a motor actuated translation stage, leadscrew translation assembly, geared translation device, such as those employing a stepper motor, servo motor, brushless electric motor, brushed DC motor, micro-step drive motor, high resolution stepper motor, among other types of motors.

As discussed above, in assessing alignment of the light source with the flow stream, light signals are detected from the laser irradiated flow stream. In embodiments, the subject systems include one or more photodetectors for detecting light signals from the flow stream. Photodetectors in the subject systems may be any convenient positional sensing detecting protocol, including but not limited to photosensors or photodetectors, such as active-pixel sensors (APSs), quadrant photodiodes, image sensors, charge-coupled devices (CCDs), intensified charge-coupled devices (ICCDs), light emitting diodes, photon counters, bolometers, pyroelectric detectors, photoresistors, photovoltaic cells, photodiodes, photomultiplier tubes, phototransistors, quantum dot photoconductors or photodiodes and combinations thereof, among other photodetectors. In certain embodiments, the systems of interest include a quadrant photodiode. For example the photodetector may be a quadrant photodiode having an active detecting surface area of each region that ranges from 0.01 cm² to 10 cm², such as from 0.05 cm² to 9 cm², such as from, such as from 0.1 cm² to 8 cm², such as from 0.5 cm² to 7 cm² and including from 1 cm² to 5 cm². In some instances, the photodetector is a photodiode array having more than one photodiode, such as two or more photodiodes, such as three or more, such as five or more and including 10 or more photodiodes.

The photodetector may be positioned at any suitable distance from the flow stream so long as a usable light signal is detectable. For example, detectors in the subject systems may be positioned 1 mm or more from the flow stream, such as 5 mm or more, such as 10 mm or more, such as 15 mm or more, such as 25 mm or more, such as 50 mm or more, such as 100 mm or more, such as 150 mm or more, such as 250 mm or more and including 500 mm or more from the flow stream. The detectors may also be positioned at any angle from the flow stream. For example, the detectors may be angled with respect to the vertical axis of the flow stream at from 10° to 90°, such as from 15° to 85°, such as from 20° to 80°, such as from 25° to 75° and including from 30° to 60°. In some instances, the one or more detectors are positioned at 30° to 60° with respect to the vertical axis of the flow stream.

In embodiments, systems are configured to assess alignment of the laser with the flow stream by forward scattered light, side scattered light, emitted light, transmitted light or a combination thereof. In certain embodiments, the subject systems are configured to assess alignment of the laser with the flow stream by forward propagated (e.g., scattered) light from the irradiated flow stream and include one or more positioned adjacent to the flow stream in a forward configuration from the light source. For example, the light signals from the irradiated flow stream may be detected by one or more detectors configured as forward scatter detectors. In these embodiments, the forward scatter detectors are positioned on the opposite side of the flow stream from the light source and are positioned to collect and detect forward propagated (e.g., scattered) light. In other embodiments, the subject systems are configured to assess alignment of the laser with the flow stream by detecting light signals from light propagated upstream by total internal reflectance. In certain embodiments, the subject systems are configured with flow cell nozzles as described in United States Patent Application No. 14/260,177 filed on April 23, 2014.

Aspects of the invention further include flow cytometric systems configured to carry out the above described methods. Suitable flow cytometry systems and methods for analyzing samples include, but are not limited to those described in Ormerod (ed.), Flow Cytometry: A Practical Approach, Oxford Univ. Press (1997); Jaroszeski et al. (eds.), Flow Cytometry Protocols, Methods in Molecular Biology No. 91, Humana Press (1997); Practical Flow Cytometry, 3rd ed., Wiley-Liss (1995); Virgo, et al. (2012) Ann Clin Biochem. Jan;49(pt 1):17-28; Linden, et. al., Semin Throm Hemost. 2004 Oct;30(5):502-11; Alison, et al. J Pathol, 2010 Dec; 222(4):335-344; and Herbig, et al. (2007) Crit Rev Ther Drug Carrier Syst. 24(3):203-255. In certain instances, flow cytometry systems of interest include BD Biosciences FACSCanto^{™} flow cytometer, BD Biosciences FACSVantage^{™}, BD Biosciences FACSort^{™}, BD Biosciences FACSCount^{™}, BD Biosciences FACScan^{™}, and BD Biosciences FACSCalibur^{™} systems, a BD Biosciences Influx^{™} cell sorter, BD Biosciences Jazz^{™} cell sorter and BD Biosciences Aria^{™} cell sorter or the like.

### COMPUTER-CONTROLLED SYSTEMS

Aspects of the present disclosure further include computer controlled systems for practicing the subject methods, where the systems further include one or more computers for complete automation or partial automation of a system for practicing methods described herein. In some embodiments, systems include a computer having a computer readable storage medium with a computer program stored thereon, where the computer program when loaded on the computer includes instructions for irradiating a flow stream with a laser through a wedged window, algorithm for detecting light signals from the laser irradiated flow stream and algorithm for aligning the laser with the flow stream by spatially adjusting the wedged windowin response to the detected light signal. In certain instances, systems include a computer having a computer readable storage medium with a computer program stored thereon, where the computer program when loaded on the computer further includes instructions having one or more of: algorithm for determining a maximal light signal amplitude; algorithm for adjusting the wedged windowto the position in the X-Y plane that produces the maximal light signal amplitude and algorithm for determining a position of the wedged windowin an X-Y plane that produces the maximal light signal amplitude. In other instances, the systems include a computer having a computer readable storage medium with a computer program stored thereon, where the computer program when loaded on the computer further includes instructions having one or more of: algorithm for determining a maximal light signal amplitude; algorithm for adjusting the wedged windowto the angle of orientation that produces the maximal light signal amplitude and algorithm for determining an angle of orientation of the wedged windowthat produces the maximal light signal amplitude. In certain instances, the computer program when loaded on the computer further includes instructions having algorithm for determining a position of in an X-Y plane of the wedged windowthat produces the maximal light signal amplitude; algorithm for determining a current position of the wedged windowin an X-Y plane; and algorithm for adjusting the position of the wedged windowin the X-Y plane to match the position of the wedged windowin an X-Y plane that produces the maximal light signal amplitude. In other instances, the computer program when loaded on the computer further includes instructions having algorithm for determining an angle of orientation of the wedged windowthat produces the maximal light signal amplitude; algorithm for determining a current angle of orientation of the wedged window; and algorithm for adjusting the angle of orientation of the wedged window to match the angle of orientation of the wedged window that produces the maximal light signal amplitude.

In embodiments, the system includes an input module, a processing module and an output module. Processing modules of interest may include one or more processors that are configured and automated to assess alignment of the laser, the position and angle of orientation of the wedged window and flow stream and adjust the position of one or more of the laser and wedged window in response to the assessed alignment as described above. For example processing modules may include two or more processors that are configured and automated to assess alignment of the laser with the flow stream and adjust the position of one or more of the laser and wedged window in response to the assessed alignment, such as three or more processors, such as four or more processors and including five or more processors. In some embodiments, the subject systems may include an input module such that parameters or information about the wedged window, laser, flow stream, photodetectors, etc. may be input before practicing the subject methods.

The subject systems may include both hardware and software components, where the hardware components may take the form of one or more platforms, e.g., in the form of servers, such that the functional elements, i.e., those elements of the system that carry out specific tasks (such as managing input and output of information, processing information, etc.) of the system may be carried out by the execution of software applications on and across the one or more computer platforms represented of the system.

Systems may include a display and operator input device. Operator input devices may, for example, be a keyboard, mouse, or the like. The processing module includes a processor which has access to a memory having instructions stored thereon for performing the steps of the subject methods. The processing module may include an operating system, a graphical user interface (GUI) controller, a system memory, memory storage devices, and input-output controllers, cache memory, a data backup unit, and many other devices. The processor may be a commercially available processor or it may be one of other processors that are or will become available. The processor executes the operating system and the operating system interfaces with firmware and hardware in a well-known manner, and facilitates the processor in coordinating and executing the functions of various computer programs that may be written in a variety of programming languages, such as Java, Perl, C++, other high level or low level languages, as well as combinations thereof, as is known in the art. The operating system, typically in cooperation with the processor, coordinates and executes functions of the other components of the computer. The operating system also provides scheduling, input-output control, file and data management, memory management, and communication control and related services, all in accordance with known techniques. The processor may be any suitable analog or digital system. In some embodiments, processors include analog electronics which allows the user to manually align a light source with the flow stream based on the first and second light signals. In some embodiments, the processor includes analog electronics which provide feedback control, such as for example negative feedback control.

The system memory may be any of a variety of known or future memory storage devices. Examples include any commonly available random access memory (RAM), magnetic medium such as a resident hard disk or tape, an optical medium such as a read and write compact disc, flash memory devices, or other memory storage device. The memory storage device may be any of a variety of known or future devices, including a compact disk drive, a tape drive, a removable hard disk drive, or a diskette drive. Such types of memory storage devices typically read from, and/or write to, a program storage medium (not shown) such as, respectively, a compact disk, magnetic tape, removable hard disk, or floppy diskette. Any of these program storage media, or others now in use or that may later be developed, may be considered a computer program product. As will be appreciated, these program storage media typically store a computer software program and/or data. Computer software programs, also called computer control logic, typically are stored in system memory and/or the program storage device used in conjunction with the memory storage device.

In some embodiments, a computer program product is described comprising a computer usable medium having control logic (computer software program, including program code) stored therein. The control logic, when executed by the processor the computer, causes the processor to perform functions described herein. In other embodiments, some functions are implemented primarily in hardware using, for example, a hardware state machine. Implementation of the hardware state machine so as to perform the functions described herein will be apparent to those skilled in the relevant arts.

Memory may be any suitable device in which the processor can store and retrieve data, such as magnetic, optical, or solid state storage devices (including magnetic or optical disks or tape or RAM, or any other suitable device, either fixed or portable). The processor may include a general purpose digital microprocessor suitably programmed from a computer readable medium carrying necessary program code. Programming can be provided remotely to processor through a communication channel, or previously saved in a computer program product such as memory or some other portable or fixed computer readable storage medium using any of those devices in connection with memory. For example, a magnetic or optical disk may carry the programming, and can be read by a disk writer/reader. Systems of the invention also include programming, e.g., in the form of computer program products, algorithms for use in practicing the methods as described above. Programming according to the present invention can be recorded on computer readable media, e.g., any medium that can be read and accessed directly by a computer. Such media include, but are not limited to: magnetic storage media, such as floppy discs, hard disc storage medium, and magnetic tape; optical storage media such as CD-ROM; electrical storage media such as RAM and ROM; portable flash drive; and hybrids of these categories such as magnetic/optical storage media.

The processor may also have access to a communication channel to communicate with a user at a remote location. By remote location is meant the user is not directly in contact with the system and relays input information to an input manager from an external device, such as a a computer connected to a Wide Area Network ("WAN"), telephone network, satellite network, or any other suitable communication channel, including a mobile telephone (i.e., smartphone).

In some embodiments, systems according to the present disclosure may be configured to include a communication interface. In some embodiments, the communication interface includes a receiver and/or transmitter for communicating with a network and/or another device. The communication interface can be configured for wired or wireless communication, including, but not limited to, radio frequency (RF) communication (e.g., Radio-Frequency Identification (RFID), Zigbee communication protocols, WiFi, infrared, wireless Universal Serial Bus (USB), Ultra Wide Band (UWB), Bluetooth^{®} communication protocols, and cellular communication, such as code division multiple access (CDMA) or Global System for Mobile communications (GSM).

In one embodiment, the communication interface is configured to include one or more communication ports, e.g., physical ports or interfaces such as a USB port, an RS-232 port, or any other suitable electrical connection port to allow data communication between the subject systems and other external devices such as a computer terminal (for example, at a physician's office or in hospital environment) that is configured for similar complementary data communication.

In one embodiment, the communication interface is configured for infrared communication, Bluetooth^{®} communication, or any other suitable wireless communication protocol to enable the subject systems to communicate with other devices such as computer terminals and/or networks, communication enabled mobile telephones, personal digital assistants, or any other communication devices which the user may use in conjunction.

In one embodiment, the communication interface is configured to provide a connection for data transfer utilizing Internet Protocol (IP) through a cell phone network, Short Message Service (SMS), wireless connection to a personal computer (PC) on a Local Area Network (LAN) which is connected to the internet, or WiFi connection to the internet at a WiFi hotspot.

In one embodiment, the subject systems are configured to wirelessly communicate with a server device via the communication interface, e.g., using a common standard such as 802.11 or Bluetooth^{®} RF protocol, or an IrDA infrared protocol. The server device may be another portable device, such as a smart phone, Personal Digital Assistant (PDA) or notebook computer; or a larger device such as a desktop computer, appliance, etc. In some embodiments, the server device has a display, such as a liquid crystal display (LCD), as well as an input device, such as buttons, a keyboard, mouse or touch-screen.

In some embodiments, the communication interface is configured to automatically or semi-automatically communicate data stored in the subject systems, e.g., in an optional data storage unit, with a network or server device using one or more of the communication protocols and/or mechanisms described above.

Output controllers may include controllers for any of a variety of known display devices for presenting information to a user, whether a human or a machine, whether local or remote. If one of the display devices provides visual information, this information typically may be logically and/or physically organized as an array of picture elements. A graphical user interface (GUI) controller may include any of a variety of known or future software programs for providing graphical input and output interfaces between the system and a user, and for processing user inputs. The functional elements of the computer may communicate with each other via system bus. Some of these communications may be accomplished in alternative embodiments using network or other types of remote communications. The output manager may also provide information generated by the processing module to a user at a remote location, e.g., over the Internet, phone or satellite network, in accordance with known techniques. The presentation of data by the output manager may be implemented in accordance with a variety of known techniques. As some examples, data may include SQL, HTML or XML documents, email or other files, or data in other forms. The data may include Internet URL addresses so that a user may retrieve additional SQL, HTML, XML, or other documents or data from remote sources. The one or more platforms present in the subject systems may be any type of known computer platform or a type to be developed in the future, although they typically will be of a class of computer commonly referred to as servers. However, they may also be a main-frame computer, a work station, or other computer type. They may be connected via any known or future type of cabling or other communication system including wireless systems, either networked or otherwise. They may be co-located or they may be physically separated. Various operating systems may be employed on any of the computer platforms, possibly depending on the type and/or make of computer platform chosen. Appropriate operating systems include Windows NT^{®}, Windows XP, Windows 7, Windows 8, iOS, Sun Solaris, Linux, OS/400, Compaq Tru64 Unix, SGI IRIX, Siemens Reliant Unix, and others.

### KITS

Aspects of the disclosure further include kits, where kits include one or more of a laser, flow cell configured to propagate a sample in a flow stream, a wedged window, a mount configured for coupling to the wedged windowand to spatially adjust the wedged windowand an optical adjustment component as described herein. In certain instances, kits can include one or more assay components (e.g., labeled reagents, buffers, etc., such as described above). In some instances, the kits may further include a sample collection device, e.g., a lance or needle configured to prick skin to obtain a whole blood sample, a pipette, etc., as desired. The subject kits may also include a waste collection container. Kits may also include one or more detectors, such as a position sensing detector as described above.

In some examples kits include a fluidic composition, such as a digestive enzyme composition or buffer solution. Example buffers may include but are not limited to PBS (phosphate) buffer, acetate buffer, N,N-bis(2-hydroxyethyl)glycine (Bicine) buffer, 3-{[tris(hydroxymethyl)methyl] amino}propanesulfonic acid (TAPS) buffer, 2-(N-morpholino)ethanesulfonic acid (MES) buffer, citrate buffer, tris(hydroxymethyl)methylamine (Tris) buffer, N-tris(hydroxymethyl)methylglycine (Tricine) buffer, 3-[N-Tris(hydroxymethyl) methylamino]-2-hydroxypropanesulfonic Acid (TAPSO) buffer, 4-2-hydroxyethyl-1-piperazineethanesulfonic acid (HEPES) buffer, 2-{[tris(hydroxymethyl)methyl] amino}ethanesulfonic acid (TES) buffer, piperazine-N,N'-bis(2-ethanesulfonic acid) (PIPES) buffer, dimethylarsinic acid (Cacodylate) buffer, saline sodium citrate (SSC) buffer, 2(R)-2-(methylamino)succinic acid (succinic acid) buffer, potassium phosphate buffer, N-Cyclohexyl-2-aminoethanesulfonic acid (CHES) buffer, among other types of buffered solutions. In certain instances, the fluidic composition is a cytometer-grade solution.

In still other examples, kits include a labelling reagent composition. For example, the labelling reagent composition may be a fluorophore, chromophore, enzyme, redox label, radiolabels, acoustic label, Raman (SERS) tag, mass tag, isotope tag, magnetic particle, microparticle or nanoparticle or a combination thereof. In some cases, the labelling reagent includes a labelled biomolecule, such as a polypeptide, a nucleic acid and a polysaccharide that is labelled with a fluorophore, chromophore, enzyme, redox label, radiolabels, acoustic label, Raman (SERS) tag, mass tag, isotope tag, magnetic particle, microparticle or nanoparticle or a combination thereof.

The various assay components of the kits may be present in separate containers, or some or all of them may be pre-combined. For example, in some instances, one or more components of the kit, e.g., each wedged windowis present in a sealed pouch, e.g., a sterile foil pouch or envelope.

In addition to the above components, the subject kits may further include (in certain examples ) instructions for practicing the subject methods. These instructions may be present in the subject kits in a variety of forms, one or more of which may be present in the kit. One form in which these instructions may be present is as printed information on a suitable medium or substrate, e.g., a piece or pieces of paper on which the information is printed, in the packaging of the kit, in a package insert, and the like. Yet another form of these instructions is a computer readable medium, e.g., diskette, compact disk (CD), portable flash drive, and the like, on which the information has been recorded. Yet another form of these instructions that may be present is a website address which may be used via the internet to access the information at a removed site.

### UTILITY

The subject systems, methods, and computer systems find use in a variety of different applications where it is desirable to automate alignment of a laser with a flow stream, such as in a flow cytometer. Embodiments of the present disclosure find use where minimizing the amount of reliance on human input and adjustments to the system are desired, such as in research and high throughput laboratory testing. The present disclosure also finds use in flow cytometry where it is desirable to provide a flow cytometer with improved cell sorting accuracy, enhanced particle collection, reduced energy consumption, particle charging efficiency, more accurate particle charging and enhanced particle deflection during cell sorting. In embodiments, the present disclosure reduces the need for user input or manual adjustment during sample analysis with a flow cytometer. In certain embodiments, the subject systems provide fully automated protocols so that adjustments to a flow cytometer during use require little, if any human input.

The present disclosure also finds use in applications where cells prepared from a biological sample may be desired for research, laboratory testing or for use in therapy. In some embodiments, the subject methods and devices may facilitate the obtaining individual cells prepared from a target fluidic or tissue biological sample. For example, the subject methods and systems facilitate obtaining cells from fluidic or tissue samples to be used as a research or diagnostic specimen for diseases such as cancer. Likewise, the subject methods and systems facilitate obtaining cells from fluidic or tissue samples to be used in therapy. Methods and devices of the present disclosure allow for separating and collecting cells from a biological sample (e.g., organ, tissue, tissue fragment, fluid) with enhanced efficiency and low cost as compared to traditional flow cytometry systems.

## Claims

1. A method of aligning a laser with a flow stream, the method comprising:
irradiating a flow stream with a laser through a single wedged window;
detecting light signals from the laser irradiated flow stream; and
aligning the laser with the flow stream by spatially adjusting the single wedged window in response to the detected light signal, wherein spatially adjusting the wedged window comprises adjusting an angle of orientation of the wedged window with respect to the laser thereby changing an angle of laser beam deviation provided by the wedged window.

2. The method according to claim 1, wherein the wedged window comprises a wedge angle of from 5 arc minute to 120 arc minute.

3. The method according to any one of claims 1-2, wherein the wedged window has a refractive index of from 1 to 3.

4. The method according to any one of claims 1-3, wherein detecting light signals from the laser irradiated flow stream comprises detecting light signals from laser irradiated perturbations in the flow stream.

5. The method according to claim 4, wherein the perturbations are from particles in the flow stream.

6. The method according to claim 5, wherein the particles comprise one or more of cells, non-cellular fragments, macromolecules and beads.

7. The method according to any one of claims 1-6, wherein the light signal comprises scattered light from the flow stream.

8. The method according to any one of claims 1-7, wherein spatially adjusting the wedge window comprises adjusting the position of the wedge window in an X-Y plane along a horizontal axis of the flow stream.

9. The method according to claim 8, further comprising determining the position of the wedged window that produces a maximal light signal amplitude from the laser irradiated flow stream.

10. The method according to any of the preceding claims, further comprising determining the angle of orientation of the wedged window that produces a maximal light signal amplitude from the laser irradiated flow stream.

11. The method according to any one of claims 1-10, wherein the flow stream is irradiated through the wedged window with a diode laser.

12. The method according to any one of claims 1-11, wherein the light signal is detected with a position sensing detector.

## Patentansprüche

1. Verfahren zum Ausrichten eines Lasers auf einen Flussstrom, das Verfahren umfassend:
Bestrahlen eines Flussstroms mit einem Laser durch ein einzelnes keilförmiges Fenster;
Erfassen von Lichtsignalen aus dem laserbestrahlten Flussstrom; und
Ausrichten des Lasers auf den Flussstrom durch räumliches Anpassen des einzelnen keilförmigen Fensters als Reaktion auf das erfasste Lichtsignal, wobei das räumliche Anpassen des keilförmigen Fensters das Anpassen eines Ausrichtungswinkels des keilförmigen Fensters in Bezug auf den Laser umfasst, wodurch ein durch das keilförmige Fenster bereitgestellter Winkel der Laserstrahlabweichung geändert wird.

2. Verfahren nach Anspruch 1, wobei das keilförmige Fenster einen Keilwinkel von 5 Bogenminuten bis 120 Bogenminuten umfasst.

3. Verfahren nach einem der Ansprüche 1 bis 2, wobei das keilförmige Fenster einen Brechungsindex von 1 bis 3 aufweist.

4. Verfahren nach einem der Ansprüche 1 bis 3, wobei das Erfassen von Lichtsignalen aus dem laserbestrahlten Flussstrom das Erfassen von Lichtsignalen von laserbestrahlten Störungen in dem Flussstrom umfasst.

5. Verfahren nach Anspruch 4, wobei die Störungen von Partikeln im Flussstrom herrühren.

6. Verfahren nach Anspruch 5, wobei die Partikel eine oder mehrere umfassen von Zellen, nicht-zellulären Fragmenten, Makromolekülen und Kugeln.

7. Verfahren nach einem der Ansprüche 1 bis 6, wobei das Lichtsignal Streulicht aus dem Flussstrom umfasst.

8. Verfahren nach einem der Ansprüche 1 bis 7, wobei das räumliche Anpassen des keilförmigen Fensters das Anpassen der Position des keilförmigen Fensters in einer X-Y-Ebene entlang einer horizontalen Achse des Flussstroms umfasst.

9. Verfahren nach Anspruch 8, ferner umfassend das Bestimmen der Position des keilförmigen Fensters, das eine maximale Lichtsignalamplitude aus dem laserbestrahlten Flussstrom erzeugt.

10. Verfahren nach einem der vorstehenden Ansprüche, ferner umfassend das Bestimmen des Ausrichtungswinkels des keilförmigen Fensters, das eine maximale Lichtsignalamplitude aus dem laserbestrahlten Flussstrom erzeugt.

11. Verfahren nach einem der Ansprüche 1 bis 10, wobei der Flussstrom durch das keilförmige Fenster mit einem Diodenlaser bestrahlt wird.

12. Verfahren nach einem der Ansprüche 1 bis 11, wobei das Lichtsignal mit einem Positionserfassungsdetektor erfasst wird.

## Revendications

1. Procédé d'alignement d'un laser sur un flux d'écoulement, le procédé comprenant :
l'irradiation d'un flux d'écoulement par un laser à travers une fenêtre à coin unique ;
la détection de signaux lumineux provenant du flux d'écoulement irradié par le laser ; et
l'alignement du laser sur le flux d'écoulement en réglant dans l'espace la fenêtre à coin unique en réponse au signal lumineux détecté, dans lequel le réglage spatial de la fenêtre à coin comprend le réglage d'un angle d'orientation de la fenêtre à coin par rapport au laser, ce qui permet de modifier un angle de déviation du faisceau laser fourni par la fenêtre à coin.

2. Procédé selon la revendication 1, dans lequel la fenêtre à coin comprend un angle de coin compris entre 5 minutes d'arc et 120 minutes d'arc.

3. Procédé selon l'une des revendications 1 à 2, dans lequel la fenêtre à coin présente un indice de réfraction compris entre 1 et 3.

4. Procédé selon l'une des revendications 1 à 3, dans lequel la détection de signaux lumineux provenant du flux d'écoulement irradié par laser comprend la détection de signaux lumineux provenant de perturbations irradiées par laser dans le flux d'écoulement.

5. Procédé selon la revendication 4, dans lequel les perturbations proviennent de particules dans le flux d'écoulement.

6. Procédé selon la revendication 5, dans lequel les particules comprennent une ou plusieurs cellules, des fragments non cellulaires, des macromolécules et des billes.

7. Procédé selon l'une des revendications 1 à 6, dans lequel le signal lumineux comprend de la lumière dispersée par le flux d'écoulement.

8. Procédé selon l'une des revendications 1 à 7, dans lequel le réglage spatial de la fenêtre à coin comprend le réglage de la position de la fenêtre à coin dans un plan X-Y le long d'un axe horizontal du flux d'écoulement.

9. Procédé selon la revendication 8, comprenant en outre la détermination de la position de la fenêtre à coin qui produit une amplitude maximale de signal lumineux à partir du flux d'écoulement irradié par le laser.

10. Procédé selon l'une quelconque des revendications précédentes, comprenant en outre la détermination de l'angle d'orientation de la fenêtre à coin qui produit une amplitude maximale de signal lumineux à partir du flux d'écoulement irradié par le laser.

11. Procédé selon l'une quelconque des revendications 1 à 10, dans lequel le flux d'écoulement est irradié à travers la fenêtre à coin par une diode laser.

12. Procédé selon l'une quelconque des revendications 1 à 11, dans lequel le signal lumineux est détecté avec un détecteur détectant une position.
